(19) Europäisches Patentamt / European Patent Office / Office européen des brevets

(11) **EP 2 247 205 B1**

(12) **FASCICULE DE BREVET EUROPEEN**

(45) Date de publication et mention
de la délivrance du brevet:
**10.08.2011 Bulletin 2011/32**

(21) Numéro de dépôt: **09706714.4**

(22) Date de dépôt: **22.01.2009**

(51) Int Cl.:
*A23L 3/3571* (2006.01)   *A23L 2/44* (2006.01)
*C12G 1/00* (2006.01)   *C12H 1/00* (2006.01)
*C12H 1/04* (2006.01)

(86) Numéro de dépôt international:
**PCT/FR2009/050087**

(87) Numéro de publication internationale:
**WO 2009/095587 (06.08.2009 Gazette 2009/32)**

(54) **COMPOSITION POUR LA STABILISATION D'UN LIQUIDE AQUEUX ALIMENTAIRE SENSIBLE A L'OXYDATION**

ZUSAMMENSETZUNG ZUM STABILISIEREN EINER WÄSSRIGEN OXIDATIONSANFÄLLIGEN LEBENSMITTELFLÜSSIGKEIT

COMPOSITION FOR STABILISING A DIETARY AQUEOUS LIQUID SENSITIVE TO OXIDATION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **23.01.2008 FR 0850421**

(43) Date de publication de la demande:
**10.11.2010 Bulletin 2010/45**

(73) Titulaire: **Institut National De La Recherche Agronomique (INRA) 75007 Paris (FR)**

(72) Inventeurs:
• **SALMON, Jean-Michel F-34170 Castelnau (FR)**
• **Les auters inventeurs ont renoncé à leur désignation.**

(74) Mandataire: **Catherine, Alain et al Cabinet HARLE et PHELIP 14-16, rue Ballu 75009 Paris (FR)**

(56) Documents cités:
**EP-A- 0 384 541    EP-A- 1 236 795
FR-A- 2 736 925    FR-A- 2 865 215
US-A- 4 996 073**

**Description**

**Domaine de l'invention**

La présente invention se rapporte au domaine de la conservation des liquides qui peuvent être altérés par des phénomènes d'oxydation.

**Art antérieur**

De manière générale, il existe un besoin constant pour la mise au point de nouveaux procédés permettant de stabiliser les liquides aqueux alimentaires sensibles à l'oxydation, afin d'améliorer leurs conditions de conservation ou d'allonger leur durée de stockage.

Les inconvénients liés à l'altération des propriétés physico-chimiques ou des propriétés organoleptiques des liquides aqueux pour l'alimentation humaine ou animale sont connus depuis longtemps. Des solutions permettant de surmonter de tels inconvénients ont déjà été décrites dans l'état de la technique.

Les moyens connus pour réduire ou bloquer l'oxydation des liquides aqueux alimentaires au cours du temps de conservation englobent : (i) les moyens physiques, (ii) les moyens mettant en oeuvre des agents chimiques à propriété anti-oxydantes et (iii) les moyens mettant en oeuvre des agents biologiques, par exemple des microorganismes.

Parmi les différents moyens mécaniques, on peut citer ceux qui permettent l'élimination de l'oxygène dissous dans des liquides tels que :

- un procédé de mise sous pression du liquide, de préférence un jus de fruit, par utilisation d'azote gazeux, tel que décrit dans le brevet JP2006141319 ;
- un film absorbant l'oxygène qui est posé à la surface du liquide à protéger, tel que décrit dans la demande de brevet JP6100044 ;
- une double couche de films pour isoler le liquide à protéger, la couche externe étant imperméable à l'oxygène et la couche interne pouvant absorber l'oxygène, telle que décrite dans la demande de brevet JP5319459 ;
- un procédé d'application d'une couche de gaz inerte plus dense que l'air compatible avec la nourriture sur la surface de liquides, notamment de boissons exposés à l'oxygène dans un contenant ouvert, tel que décrit dans la demande de brevet EP0134687.

Parmi les moyens de traitement chimique utilisés pour stabiliser contre l'oxydation les liquides à destination alimentaire, notamment les boissons fermentées, plus particulièrement les vins, l'utilisation de PVP (Polyvinylpyrrolidone), d'acide ascorbique et/ou de sulfite ($SO_2$) est pratiquée. Mais de tels procédés de stabilisation chimique contre l'oxydation sont susceptibles d'être fortement réglementés dans l'avenir et même, au moins pour certains d'entre ces procédés, interdits.

Parmi les moyens biologiques, on connaît l'utilisation de microorganismes tels que les bactéries de grains de kéfir comme additifs antioxydants, pour des boissons notamment, comme décrit dans la demande de brevet EP1607476.

Selon les types de liquides aqueux alimentaires, les réactions d'oxydation des substances que ces liquides contiennent, au cours du temps de conservation, entraînent des altérations de degré variable de leurs propriétés physico-chimiques ou organoleptiques.

Parmi les liquides aqueux alimentaires pour lesquels une oxydation entraîne des altérations les rendant impropres à la consommation, on cite en premier lieu les vins, et par ordre d'importance le vin blanc.

Les réactions d'oxydation qui ont lieu dans les vins, en particulier dans les vins blancs, les vins rosés et certains vins rouges, provoquent une perte des arômes variétaux, un profil organoleptique modifié et une coloration brune des vins. Ces modifications indésirables sont provoquées, au moins en partie, par des réactions d'oxydation.

En particulier, on attribue le brunissement des vins blancs à des réactions de polymérisation oxydatives de certains polyphénols. Certains polyphénols, en réagissant avec l'oxygène, sont transformés en quinones et semi-quinones. Ces composés très réactifs se complexent avec d'autres composés à fonction sulfanyle, tels que les thiols volatils, pour former des pigments bruns. Cette complexation avec les quinones et les semi-quinones détruit les propriétés aromatiques des thiols volatils.

Les vins blancs sont élaborés avec l'objectif d'obtenir des vins fruités, frais, à consommer assez rapidement, ou bien des vins de garde de type "premium" vieillis pendant plusieurs années.

Il est essentiel de protéger les vins, en particulier les vins blancs, de l'oxydation et du brunissement qui peuvent détériorer leur profil organoleptique. Notamment, la détérioration des arômes et le brunissement apportent un impact organoleptique négatif entraînant une forte dépréciation à la vente, et en conséquence une perte économique significative.

Dès le moment où les vins blancs sont conditionnés dans différents contenants, après l'étape de filtration qui est réalisée en fin de fermentation, ils sont exposés de manière continue à l'oxygène de l'air. En effet, de l'oxygène est piégé avec le vin blanc, au moment du conditionnement. Puis, les contenants n'étant en général pas totalement hermétiques aux gaz, de l'oxygène pénètre dans le contenant tout au long de la conservation du vin et de son vieillissement.

Plusieurs solutions ont été envisagées pour prévenir ce brunissement et les altérations organoleptiques qui y sont associés, dus au contact du vin avec de l'oxygène au cours du temps de conservation, telles que :

- limiter l'exposition à l'oxygène,
- utiliser des anti-oxydants naturels ou de synthèse ou,
- éliminer les polyphénols responsables du brunissement.

Toutefois, avec les techniques actuelles utilisées pour conditionner les liquides aqueux à destination alimentaire, y compris les vins, il est très difficile d'exclure totalement tout contact desdits liquides avec l'oxygène de l'air durant leur transport jusqu'à l'unité de conditionnement.

De plus, après le conditionnement en bouteille de verre, l'oxygène peut diffuser à travers un bouchon de liège ou provenir de l'espace de tête gazeux situé sous le bouchon après l'embouteillage.

Dans le cas du vin, le contact avec l'oxygène de l'air a lieu aussi pour d'autres types de conditionnement, tels que en outre à vin ou BIB® (pour « Bag-In-Box »). Dans les BIB®s, le vin est conditionné sous vide dans une poche en matière plastique, ladite poche en matière plastique étant disposée à l'intérieur d'un emballage en carton. La poche en matière plastique est fabriquée dans un matériau qui fait barrière à l'oxygène sur sa face externe, mais n'est pas totalement hermétique à l'oxygène.

Pour limiter ou bloquer les réactions d'oxydation dans le vin au cours de sa conservation, l'apport d'agents chimiques antioxydants tels le sulfite ($SO_2$) pour empêcher l'oxydation des composés sensibles du vin est très limité car il est soumis à la réglementation sur les denrées alimentaires. Le dioxyde de soufre ajouté en excès peut également altérer la qualité organoleptique du vin.

Pour éliminer les polyphénols afin de corriger le brunissement des vins blancs, des agents de collage sont communément employés, comme le charbon activé ou la PVPP (polyvinylpyrrolidone) (Fialdes, E., Rev. des oenologues, 1989,54, 19-22 ; Baron, R. et al., Z. Lebensm. Unters Forsch, 1997, 205,474-78). Cependant, ces substances présentent l'inconvénient d'altérer les saveurs et les arômes des vins (Sims, C. A., et al., Am. J. Enol. Vitic ; 1995,46 (2), 155-158). En outre, certains polyphénols tels que le resvératrol, ayant des propriétés physico-chimiques et organoleptiques très intéressantes d'un point de vue alimentaire et sur la santé, leur élimination doit si possible être évitée.

Des travaux de recherche académique ont montré que l'addition à l'embouteillage de 10mg/L de glutathion à un vin blanc, limite le jaunissement de sa couleur, l'érosion de son arôme et sa tendance à ne pas bien vieillir. Le glutathion pourrait réagir lors de l'élevage ou après la mise en bouteille, avec les quinones pour former un complexe incolore, empêchant alors ces mêmes quinones de réagir avec de nombreux composés à fonction sulfanyle dont les thiols du vin (molécules aromatiques), ce qui provoque habituellement un complexe brun, et qui empêche l'expression aromatique.

Ces résultats ne sont cependant pas susceptibles d'être transposés dans la pratique des viticulteurs, car l'ajout de glutathion sur un vin produit fini n'est pas autorisé dans les pratiques oenologiques. Par ailleurs, l'introduction de glutathion dans le moût pose le problème de sa consommation durant la fermentation alcoolique par les levures actives inoculées.

Ainsi, si ces études présentent un intérêt pour la compréhension des phénomènes en jeu dans la détérioration des arômes et le brunissement des vins blancs, aucune solution technique n'est proposée pour permettre de s'affranchir en pratique de ces problèmes.

Comme déjà mentionné, il a aussi été envisagé d'utiliser des agents biologiques pour limiter les phénomènes d'oxydation dus à la présence d'oxygène, notamment par l'utilisation de levures consommatrices d'oxygène.

La demande de brevet européen n° EP 0 305 005 B1 décrit l'utilisation de levures consommant de l'oxygène pour limiter les phénomènes d'oxydation dans les produits contenant de l'eau au cours de leur conservation. Cette demande de brevet décrit en particulier une levure et un procédé plus particulièrement adaptés à la conservation de la bière. Les levures utilisées consistent en des levures déshydratées qui sont ultérieurement réhydratées par l'eau contenue dans la bière. Après leur réhydratation, ces levures sont viables et se reproduisent. Pour éviter la génération de turbidité dans la bière du fait de la multiplication des levures consommatrices d'oxygène, ces cellules de levures sont immobilisées dans des supports solides compatibles avec les normes alimentaires, telles que des cires ou des gommes. Ces supports sont perméables à l'eau et à l'oxygène. Lors de l'étape de pasteurisation, réalisée pour le conditionnement de la bière, les cellules de levure restent viables, capables de consommer de l'oxygène. Cette consommation de l'oxygène n'est pas réalisée par une réaction de fermentation. La demande EP 1236 795 décrit l'utilisation de levure oenologiqe active après la phase de fermentation dans un procédé de vinification pour obtenir des vins de qualité supérieur.

Afin de remédier aux phénomènes d'oxydation pendant le vieillissement ou la conservation du vin, il a été suggéré de traiter le vin avec des cellules de levures de boulangerie (Bonilla et al., J. Agric. Food Chem.,2001, 49, 1928-1933). En effet, les membranes des levures ont la propriété de retenir certains composés, et notamment des substances colorantes telles que les anthocyanes. Les vins ont été traités par des doses de levure allant de 0,5 g/L à 5 g/L durant 24 heures, puis ont été filtrés. Un effet sur la coloration a été observé, tandis que les propriétés gustatives étaient préservées. Cette technique appartenant aux "technologies vertes" a cependant l'inconvénient de nécessiter une stérilisation microbiologique subséquente afin d'éviter que les cellules de levure résiduelles se multiplient et altèrent la transparence ainsi que les propriétés organoleptiques du vin traité.

La demande PCT n° WO 2005/080543 décrit un procédé de préparation d'un vin permettant de prévenir les problèmes d'oxydation rencontrés lors du vieillissement du vin, de préférence un vin blanc, grâce à l'introduction de levure enrichie en glutathion dans le moût avant la mise en fermentation, de préférence au début ou en cours de fermentation. Grâce à ce procédé, il est possible d'obtenir, en utilisant uniquement des ingrédients naturels, des vins blancs de qualité, répondant aux critères suivants : rondeur du vin, fraîcheur et fruité, stabilité dans le temps des arômes, stabilité dans le temps de la couleur. Aucun ajout de substances étrangères tels que des anti-oxydants chimiques n'est requis, aucune manipulation complexe n'est nécessaire.

Selon la demande PCT n° WO 2005/080543, il est recommandé d'introduire la levure enrichie en glutathion dans le moût en début de fermentation.

Les traitements post-fermentation du vin pour obtenir un produit fini apte au vieillissement ou à la consommation, notamment les étapes de filtration, permettent l'élimination des levures enrichies en glutathion. Lors de la conservation du vin blanc dans un contenant, les problèmes d'oxydation, de brunissement, d'altération des propriétés gustatives et odorantes restent donc non résolus.

Il existe donc un besoin pour de nouveaux procédés de stabilisation des liquides aqueux alimentaires, aptes à protéger lesdits liquides de l'oxydation provoquée par l'oxygène pendant leur durée de conservation.

## Résumé de l'invention

L'invention a pour objet une composition pour protéger de l'oxydation un liquide alimentaire contenant des substances sensibles à l'oxydation au cours de sa conservation comprenant une combinaison de deux types de cellules de levures : (i) des cellules de levures non viables et sélectionnées pour leur aptitude à consommer rapidement de l'oxygène et (ii) des cellules de levures inactivées produites de façon à être riches en glutathion, telle que définie dans la revendication 1.

Un autre objet de l'invention est un procédé de stabilisation, d'un liquide aqueux alimentaire contenant des substances sensibles à l'oxydation au cours de sa conservation, comprenant une étape de mise en contact dudit liquide avec ladite composition de cellules de levure.

L'invention concerne aussi un traitement réalisé de manière à abaisser le potentiel d'oxydoréduction d'un liquide aqueux alimentaire de façon à favoriser l'expression optimale de certains composés en équilibre d'oxydo-réduction dans ledit liquide, et qui ont un intérêt organoleptique sous leur forme réduite.

La présente invention a également pour objet une utilisation de la composition de cellules de levures ci-dessus pour stabiliser, au cours de leur conservation, les liquides aqueux alimentaires définis précédemment vis-à-vis de l'oxydation.

## Description des figures

Afin que l'invention puisse être plus compréhensible, des références seront maintenant faites aux figures ci-jointes dans lesquelles :

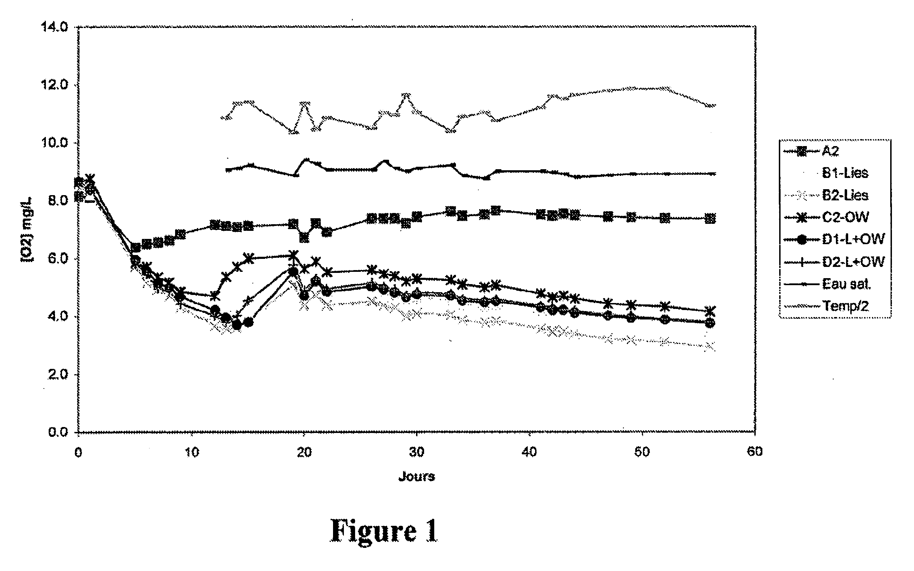

La **figure 1** représente l'évolution de la teneur en oxygène dissous au cours du temps pour un vin mis en présence soit de lies (Lies), soit de levures Optiwhite® (OW), soit de la composition selon l'invention (ici en présence de lies et de levures OptiWhite® (L+OW)). La courbe A2 représente la courbe d'évolution en oxygène pour le vin témoin. (c'est-à-dire sans lies et sans levures OptiWhite®). La courbe Temp/2 représente l'évolution de la température au cours du temps. L'abscisse représente les jours et l'ordonnée représente la teneur en $O_2$ (mg/L) pour les courbes A2, Lies, OW et L+W ou la température en °C divisé par deux pour la courbe Temp/2.

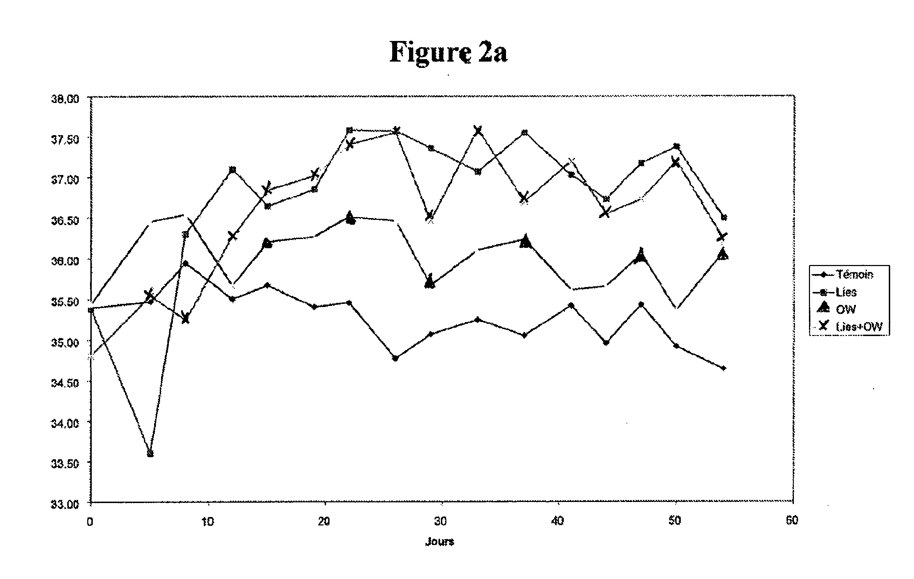

La **figure 2a** représente l'évolution moyenne du paramètre « L » par modalité pour les lies, les levures OptiWhite® et la composition selon l'invention, le paramètre « L » étant l'un des paramètres chromatiques de la CIE 1976. L'abscisse représente les jours et l'ordonnée représente la valeur du paramètre « L ».

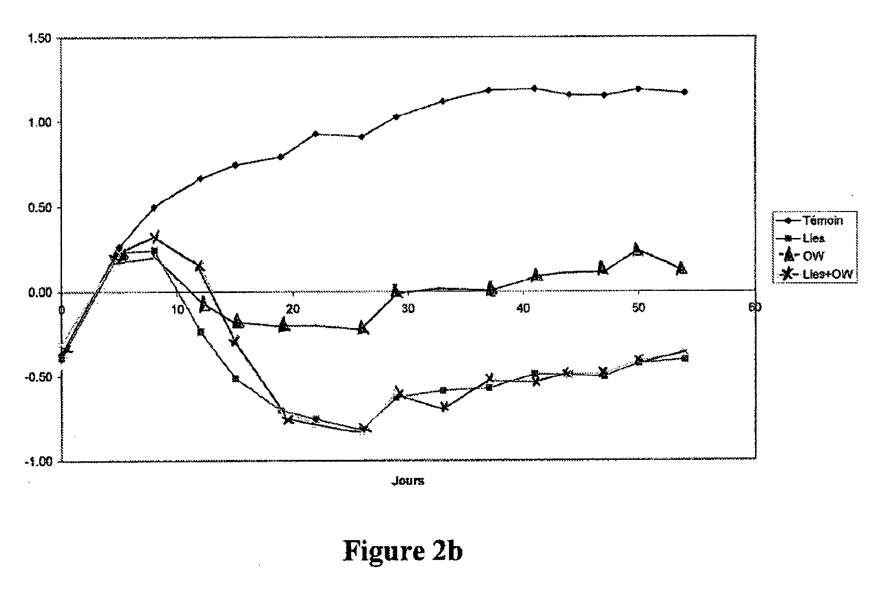

La **figure 2b** représente l'évolution moyenne du paramètre « a » par modalité pour les lies, les levures OptiWhite® et la composition selon l'invention, le paramètre « a » étant l'un des paramètres chromatiques de la CIE 1976. L'abscisse représente les jours et l'ordonnée représente la valeur du paramètre « a ».

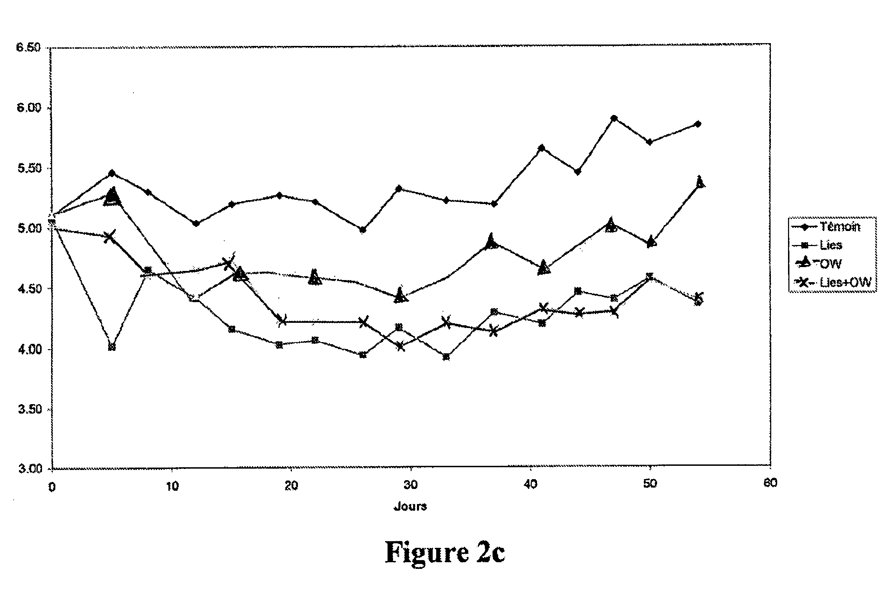

La **figure 2c** représente l'évolution moyenne du paramètre «b» par modalité pour les lies, les levures OptiWhite® et la composition selon l'invention, le paramètre « b » étant l'un des paramètres chromatiques de la CIE 1976.

L'abscisse représente les jours et l'ordonnée représente la valeur du paramètre « b ».

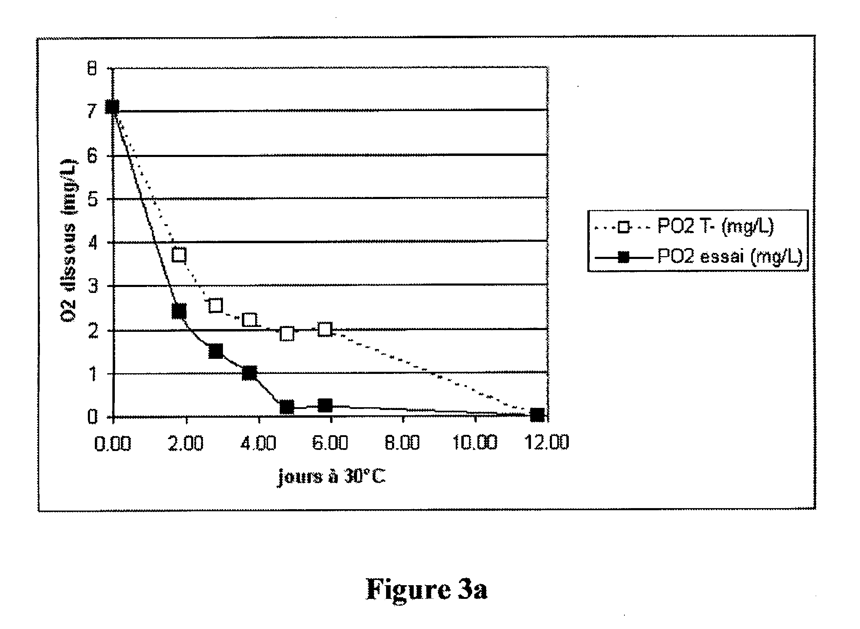

La **figure 3a** représente l'évolution de la teneur en oxygène dissous résiduel d'un vin conservé dans une bouteille de verre témoin avec bouchon et l'évolution de la teneur en oxygène dissous résiduel d'un vin conservé dans une bouteille de verre avec bouchon mis en contact avec la composition selon l'invention. L'abscisse représente le temps en jours et l'ordonnée représente la teneur en oxygène dissous (mg/L).

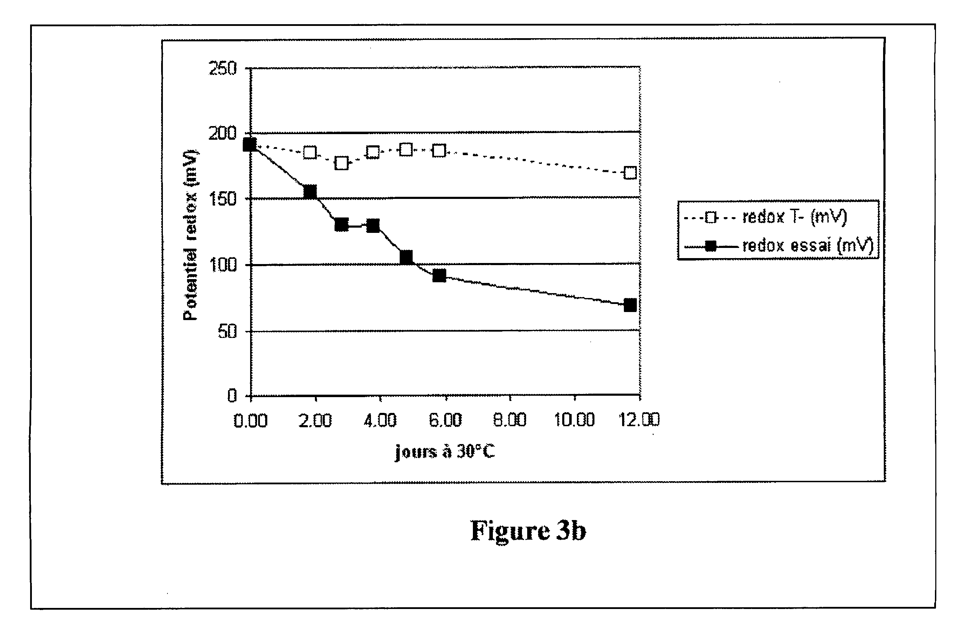

La **figure 3b** représente l'évolution du potentiel d'oxydoréduction d'un vin conservé dans une bouteille de verre témoin avec bouchon et l'évolution du potentiel d'oxydoréduction d'un vin conservé dans une bouteille de verre avec bouchon mis en contact avec la composition selon l'invention. L'abscisse représente le temps en jours et l'ordonnée représente le potentiel d'oxydo-réduction (mV).

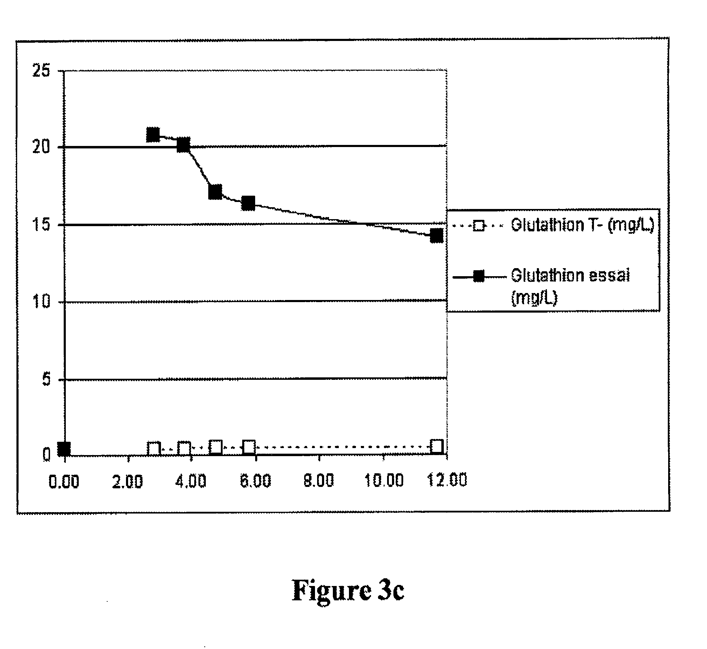

La **figure 3c** représente l'évolution de la teneur en glutathion d'un vin conservé dans une bouteille de verre témoin avec bouchon et l'évolution de la teneur en glutathion d'un vin conservé dans une bouteille de verre avec bouchon mis en contact avec la composition selon l'invention. L'abscisse représente le temps en jours et l'ordonnée représente la teneur en glutathion (mg/L).

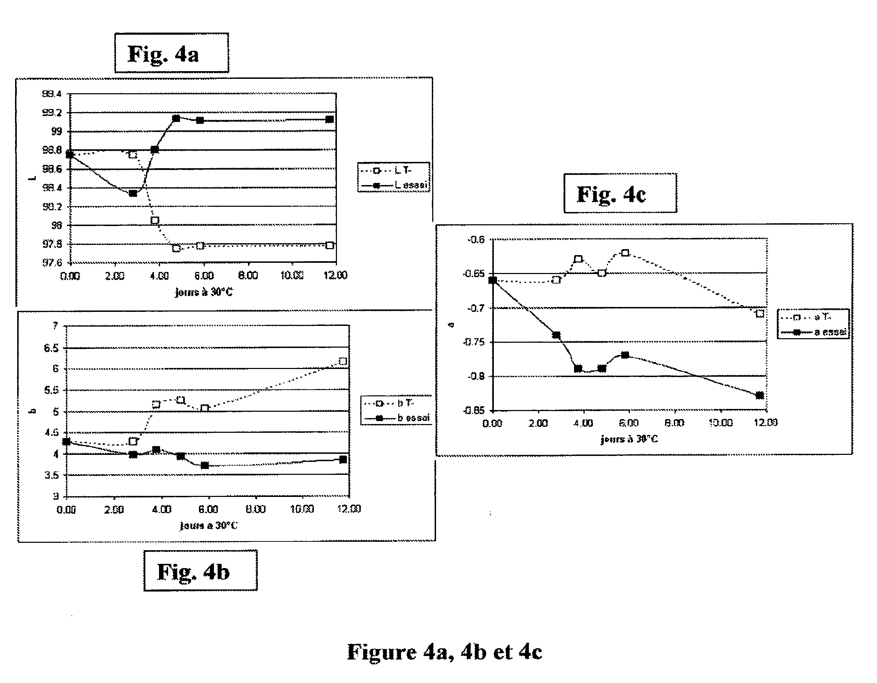

Les **figures 4a, 4b et 4c** représentent l'évolution des caractéristiques chromatiques, respectivement les paramètres « L », « b » et « a », d'un vin conservé dans une bouteille de verre témoin avec bouchon et l'évolution des caractéristiques chromatiques d'un vin conservé dans une bouteille de verre avec bouchon mis en contact avec la composition selon l'invention. L'abscisse représente les jours à 30°C et l'ordonnée représente la valeur des paramètres « L », « a » et « b ».

## Description détaillée

La présente invention fournit des compositions et des procédés destinés à stabiliser les liquides aqueux alimentaires contre l'oxydation durant leur conservation.

L'invention a pour objet une composition pour protéger de l'oxydation un liquide alimentaire contenant des substances sensibles à l'oxydation au cours de sa conservation comprenant une combinaison de deux types de cellules de levures :

(i) des cellules de levures non viables et aptes à consommer rapidement l'oxygène, et
(ii) des cellules de levures inactivées enrichies en glutathion, tient que définie dans la revendication 1

La composition ci-dessus offre une solution simple et peu onéreuse pour la stabilisation contre l'oxydation d'un liquide aqueux alimentaire contenant des substances sensibles à l'oxydation, tout particulièrement pendant sa période de conservation.

L'effet de stabilisation contre l'oxydation de la composition selon l'invention est illustré notamment par une stabilisation de la couleur, des arômes variétaux sensibles à l'oxydation, et plus généralement des propriétés organoleptiques du liquide aqueux alimentaire qui est traité avec cette composition.

De préférence, on entend par « liquide aqueux alimentaire contenant des substances sensibles à l'oxydation », des boissons destinées à la consommation humaine.

Les boissons destinées à la consommation humaine englobent les boissons du groupe (i) des jus de fruits ou de légumes, (ii) des boissons fermentées, (iii) du lait , (iv) des compositions liquides ou semi-liquides préparées à base de lait, fermentées ou non fermentées, et (v) du thé.

Les boissons fermentées englobent le vin, la bière, le cidre, le saké et le yaourt liquide dit « yaourt à boire ».

Selon l'invention, on entend par « vin » le produit obtenu par la fermentation alcoolique, totale ou partielle, de baies de raisin frais, foulés ou non foulés, ou de moûts de raisin.

De préférence, lesdites substances sensibles à l'oxydation sont des polyphénols.

De préférence, on entend par liquide aqueux alimentaire contenant des substances sensibles à l'oxydation, des boissons destinées à la consommation humaine contenant au moins 1 mg de polyphénols par litre dudit liquide.

Ledit liquide contenant des substances sensibles à l'oxydation est de préférence choisi dans le groupe des bières, des jus de fruits, des vins très sensibles à l'oxygène et des autres boissons très sensibles à l'oxygène.

Les vins englobent les vins blancs, les vins rosés et les vins rouges.

Encore plus particulièrement, les vins englobent de manière générale tous les vins blancs, qui sont connus pour être très sensibles à l'oxydation, ainsi que certains vins rosés et rouges.

Ainsi, de manière tout à fait préférée, le liquide aqueux alimentaire consiste en un vin blanc.

On entend par protection contre l'oxydation, ou encore stabilisation, d'un liquide aqueux alimentaire contenant des substances sensibles à l'oxydation, une réduction ou un blocage des réactions d'oxydation de certains composés tels que les polyphénols contenus dans ledit liquide et desdites réactions d'oxydation sur les qualités physico-chimiques et organoleptiques qui rendent ledit liquide propre à la consommation humaine.

Au cours de leur conservation, les vins blancs peuvent subir une perte des arômes variétaux, une modification de leur profil organoleptique, ainsi qu'un brunissement. On entend par stabilisation d'un vin blanc, notamment une protection contre les évolutions aromatiques et chromatiques indésirables provoquées par l'oxydation.

Selon l'invention, des cellules de levures non viables ou inactivées possèdent en commun la perte de leur capacité à se multiplier et à fermenter.

Par cellules de levures non viables aptes à consommer rapidement l'oxygène, on entend des cellules de levures ayant perdu leur capacité à se multiplier et possédant une vitesse de réaction avec l'oxygène et une affinité pour l'oxygène supérieures auxdites substances sensibles à l'oxydation, comme illustré dans l'exemple 1. Dans un mode de réalisation privilégié, ces cellules de levures ont été préalablement sélectionnées pour leur aptitude à consommer rapidement de l'oxygène.

L'aptitude des cellules de levure non viables à consommer rapidement l'oxygène est illustrée en particulier par leur vitesse de consommation de l'oxygène.

La vitesse de consommation de l'oxygène par des cellules de levure introduites dans un milieu donné peut être déterminée à partir de la cinétique d'évolution de la quantité d'oxygène dans ledit milieu au cours du temps. La quantité d'oxygène présent dans le milieu au cours du temps peut être déterminée par les méthodes de dosage de l'oxygène bien connues de l'homme du métier. En particulier, l'homme du métier peut utiliser un oxymètre adapté à la mesure de l'oxygène dans un milieu liquide. Dans certains modes de réalisation, la quantité d'oxygène est mesurée au cours du temps grâce à un oxymètre muni d'une sonde polarographique ou d'une sonde galvanique tel qu'illustré dans l'exemple 1.

Dans tous les cas de mesure, la concentration en levures dans le milieu doit être de l'ordre de $10^8$ cellules par ml pour permettre une mesure précise de leur consommation en oxygène.

De préférence, le milieu utilisé pour déterminer la vitesse de consommation de l'oxygène des levures est un milieu hydroalcoolique comprenant éventuellement des substances sensibles à l'oxydation.

On entend par milieu hydroalcoolique un milieu issu du mélange d'une solution aqueuse et de l'éthanol, le pourcentage d'éthanol étant préférentiellement compris entre 5% et 20% en volume par rapport au volume total du milieu.

Les inventeurs ont montré que des cellules de levures non-viables présentent une vitesse de consommation en oxygène d'au moins 5 ng $O_2$ s$^{-1}$ pour $10^{10}$ cellules de levures dans le tampon CMP (milieu hydroalcoolique décrit dans l'exemple 1) à une concentration cellulaire de l'ordre de $10^8$ cellules/ml sont suffisamment aptes à consommer rapidement l'oxygène au sens l'invention.

Dans certains modes de réalisation préférés, les levures non viables aptes à consommer rapidement de l'oxygène consistent en des cellules de levures qui possèdent une vitesse de consommation en oxygène d'au moins 5 ng $O_2$ s$^{-1}$ pour $10^{10}$ cellules de levure lorsque lesdites cellules de levure sont présentes à une concentration de l'ordre de $10^8$ cellules/ml dans un tampon hydroalcoolique.

On entend par une vitesse de consommation en oxygène d'au moins 5 ng $O_2$ s$^{-1}$ pour $10^{10}$ cellules de levure, de préférence une vitesse de consommation en oxygène d'au moins 5, 10, 15, 20, 25, 30, 35, 40, 45, 50 ng $O_2$ s$^{-1}$ pour $10^{10}$ cellules de levure.

De manière préférée, les cellules de levures non-viables aptes à consommer rapidement de l'oxygène présentent une vitesse de consommation en oxygène allant de 5 ng $O_2$ s$^{-1}$ à 40 ng $O_2$ s$^{-1}$ pour $10^{10}$ cellules de levure.

On entend par une concentration de l'ordre de $10^8$ cellules/ml, une concentration allant de $10^7$ à $10^9$ cellules/ml

Dans certains modes de réalisation de la composition, les cellules de levures non viables aptes à consommer rapidement l'oxygène peuvent être choisies parmi le groupe constitué par les lies de levure et les cellules de levure inactivées.

On entend par cellules de levure inactivées des cellules de levure ayant subi un traitement les rendant inaptes à se multiplier et à fermenter. Un tel traitement peut être par exemple un traitement thermique, chimique et/ou par rayonnement.

A titre illustratif et non limitatif, il peut être cité comme cellules de levure inactivées appropriées la souche EC1118 inactivée thermiquement tel qu'illustré dans l'exemple 8 de la présente demande.

Dans certains modes de réalisation, on choisit des lies de levures issues de la fermentation du vin comme cellules de levures non viables et aptes à consommer rapidement de l'oxygène. En effet, les lies représentent de grandes quantités de cellules de levure non-viables à la fin de la fermentation dans le procédé de vinification. Ces cellules non-viables de levure possèdent de grandes quantités de molécules-substrats de réaction d'oxydation masquées lorsque ces cellules sont vivantes notamment au cours de la multiplication cellulaire (voir par exemple Fornairon et al., 2000, Food Chemistry, Ed Elsevier, pp. 519-528).

Au cours du processus de fermentation, pendant la vinification par exemple, il a été démontré que la consommation d'oxygène par les lies pouvait contrecarrer des phénomènes d'oxydation préjudiciables aux qualités organoleptiques du vin suite à des ajouts d'oxygène dans le milieu, (voir par exemple Salmon et al., 2003, Journal of Bioscience and Bioengineering, pp. 496-503). De manière surprenante, la mise en oeuvre de la composition selon l'invention démontre que ces propriétés des lies s'avèrent utiles pour protéger les vins finis en cours de conservation des phénomènes d'oxydation devenus indésirables.

Dans certains modes de réalisation, les cellules de levure non-viables sont des lies de levure obtenues à partir d'une culture de levures dans un milieu de fermentation reproduisant les conditions des moûts naturels.

A titre illustratif et non limitatif, il peut être cité comme milieu de fermentation reproduisant les conditions des moûts naturels un milieu synthétique riche en azote assimilable tel que le milieu MS300.

A titre illustratif et non limitatif, il peut être cité comme cellules de levures non viables possédant une consommation en oxygène d'au moins 5 ng.$O_2$ s$^{-1}$ pour $10^{10}$ cellules de levures, la lie de levures de *Saccharomyces cerevisiae K1* obtenue par culture desdites levures dans le milieu synthétique MS300. L'obtention de ladite lie et la détermination de sa vitesse de consommation de l'oxygène sont décrites dans l'exemple 1.

On peut penser que les lies de levures consomment l'oxygène présent dans tout type de liquide contenant des substances réactives à l'oxygène. La capacité de consommation d'oxygène de ces cellules de levures non-viables peut être supérieure à celle de cellules déshydratées viables et à celle de cellules inactivées, comme cela est illustré à l'exemple 2.

Dans certains modes de réalisation de la composition selon l'invention, les cellules de levures non viables aptes à consommer rapidement de l'oxygène consistent en des cellules de levures de l'espèce *Saccharomyces cerevisiae.*

De manière générale, les cellules de levures inactivées enrichies en glutathion consistent en des cellules de levure qui ont été produites spécifiquement pour contenir une grande quantité de glutathion et libérer une grande quantité de glutathion dans le milieu extérieur.

Dans certains modes de réalisation de la composition, lesdites levures inactivées enrichies en glutathion sont des levures telles que décrites dans la demande PCT n° WO2005/080543. Elles sont caractérisées par le dosage de leur teneur en glutathion selon la méthode de l'exemple 1, page 8 de la demande WO2005/080543..

Sans vouloir être lié par une quelconque théorie, le demandeur pense que le glutathion, qui est libéré par les cellules de levures enrichies en ce composé, réagit lors de l'élevage ou après la mise en bouteille, avec les quinones pour former un complexe incolore, empêchant alors ces mêmes quinones de réagir : (i) avec les composés chimiques à fonction sulfanyle dont les thiols de vin (molécules aromatiques), ce qui conduit à une réduction de l'expression aromatique, (ii) avec d'autres composés phénoliques pour former des pigments complexes de couleur jaune à brun altérant la couleur du produit.

Les cellules de levures contiennent naturellement une certaine quantité de glutathion, généralement de 0,2% en poids à 0,5 % en poids, par rapport au poids total de matière sèche, soit de 0,2 g à 0,5 g de glutathion pour 100 g de matière sèche de levure.

La production de cellules de levures enrichies en glutathion est bien connue de l'homme du métier qui sait la préparer par une des techniques à sa disposition (Catalino et al., 1992, Applied Microbiology and Biotechnology, Ed Springer-Verlag, pp. 141-146).

On peut enrichir en glutathion une levure en la mettant en présence de cystéine, dans des conditions optimum de culture, ladite levure peut diffuser dans le milieu jusqu'à 154,54 mg/l de glutathion après 72 heures de fermentation, (voir Santos et al., 2007, Applied Microbiology and Biotechnology, Ed. Springer, pp. 1211-1216).

Les levures enrichies en glutathion, utilisées pour fabriquer la composition selon l'invention, contiennent plus de 0,5% en poids de glutathion, en poids rapporté au poids total de matière sèche de la levure. De manière avantageuse, la levure enrichie en glutathion contient au moins 1 % en poids de glutathion, et de préférence au moins 1,5% en poids de glutathion, en poids rapporté au poids total de matière sèche de la levure. Par exemple, pour une efficacité optimum, on utilise une levure enrichie à 1,8% en poids de glutathion, par rapport au poids total des cellules de levure.

On peut inactiver lesdites levures enrichies en glutathion par toute méthode connue de l'homme du métier, comme par exemple par traitement thermique, chimique et éventuellement par exposition à un rayonnement, y compris un rayonnement radioactif ou un rayonnement Ultra-Violet. Lesdites levures inactivées sont non-viables et ne peuvent plus se multiplier ni fermenter.

Dans certains modes de réalisation avantageux, les cellules de levures enrichies en glutathion selon l'invention appartiennent à des espèces de levures de type oenologique, dont l'espèce *Saccharomyces cereviviae.*

Les espèces de levures de type oenologique englobent des *Saccharomyces cerevisiae.*

La combinaison (i) des cellules de levures non viables et aptes à consommer rapidement de l'oxygène et (ii) des cellules de levures inactivées enrichies en glutathion, dans une composition stabilisante de l'invention, conduit à une protection efficace du vin contre les phénomènes d'oxydation, que ce soit au niveau de la couleur, de la préservation d'arômes variétaux sensibles à l'oxydation, et plus généralement au niveau de la qualité organoleptique. Cette synergie est illustrée dans les exemples ci-dessous.

L'expression « au cours de sa conservation » est utilisée pour désigner le moment où la composition selon l'invention est mise en oeuvre. Un liquide aqueux alimentaire est considéré comme étant « en cours de conservation à partir du moment de son conditionnement dans un contenant de stockage et de son stockage dans un lieu où sa stabilisation est favorisée. La température de conservation d'un liquide aqueux alimentaire varie selon le type de liquide aqueux considéré. Par exemple, un jus de fruit pasteurisé et conservé stérilement peut être conservé à température ambiante, c'est à dire à une température d'environ 20°C, voire à une température de 20°C. La température de conservation d'un jus de fruit frais non pasteurisé doit être basse afin d'éviter la prolifération éventuelle des micro-organismes que ledit jus est susceptible de contenir, ladite température étant classiquement comprise entre 1 °C et 7°C, de préférence entre 3°C et 5°C. La température de conservation à long terme d'un vin est classiquement comprise entre 10°C et 17°C, avantageusement entre 11°C et 15°C et préférentiellement d'environ 12°C. Toutefois, quel que soit le liquide aqueux alimentaire considéré, les conditions de température optimale de conservation ne sont pas toujours respectées pendant la période de temps de transport, cette période de temps pouvant être de plusieurs jours, voire plus d'une semaine, par exemple pour un transport intercontinental de très grande distance réalisé par voie maritime.

Dans le cas d'un transport d'un liquide aqueux alimentaire dans des conditions de température significativement supérieure à la température optimale prédéfinie. Ces conditions de température non contrôlées peuvent entraîner une altération des qualités dudit liquide aqueux alimentaire, par exemple entraîner une accélération des réactions d'oxydation.

Or, le demandeur a montré que la composition de l'invention conserve son activité de protection d'un liquide aqueux alimentaire contre l'oxydation jusqu'à des températures élevées d'au moins 30°C. En conséquence, la composition selon l'invention est active sur la stabilisation des liquides aqueux alimentaires contre l'oxydation durant la totalité de la période de conservation dudit liquide, y compris pendant la période de temps de transport où les conditions optimales de conservation ne peuvent pas toujours être respectées. De plus, la composition selon l'invention est également active dans des situations dans lesquelles la température de conservation n'est plus optimale, par exemple dans le cas d'un dérèglement des dispositifs de régulation de température, ou bien dans le cas d'une période climatique de forte chaleur

Dans un mode de réalisation préféré d'une composition stabilisante selon l'invention, les cellules de levures sont incluses ensemble dans un système d'immobilisation perméable aux liquides. Ledit système d'immobilisation est réalisé dans des matériaux compatibles avec les normes alimentaires. Lesdits matériaux peuvent être, de manière non limitative, des capillaires membranaires, des tubes en silicone ou des additifs de type texturants ou gélifiants.

L'ensemble desdites cellules de levures et du système d'immobilisation dans lequel elles sont incluses, de préférence immobilisées, constitue une composition selon l'invention du type « Biosystème Antioxydant Immobilisé ».

Dans un mode de réalisation d'une composition selon l'invention, les deux types de cellules de levures sont immobilisés ensemble sur un support à base d'alginate, qui est à la fois un additif alimentaire texturant et une macromolécule alimentaire à pouvoir réticulant.

A titre illustratif, on immobilise lesdites cellules dans un gel préparé à partir de polysaccharides comme l'alginate de calcium (formation ionotropique du gel) ou carraghénate de potassium (gel thermoréversible).

Des techniques d'immobilisation de cellules de levures dans une matrice d'alginate de calcium sont décrites notamment par Kawaguti et al., 2006, Biochemical Engineering Journal 29, 270-277.; Lu & Wilkins, 1996 Journal of Hazardous Materials 49, 165-179.; Podrazky & Kuncova, 2005, Sensors and Actuators B: Chemical 107, 126-134; Riordan et al., 1996, Bioresource Technology 55, 171-173).

Par exemple, pour préparer une composition stabilisante selon l'invention, on peut immobiliser des cellules de levures dans un support d'alginate en réalisant un mélange d'une solution d'alginate de sodium à 3 % (p/v) et d'une solution contenant les cellules à immobiliser. Puis ledit mélange est versé goutte à goutte dans une solution de chlorure de calcium (0,15 M) afin de générer des billes d'alginate dans lesquelles sont incluses les cellules de levure.

Les essais semi industriels sur du vin blanc décrits dans l'exemple 5 illustrent l'efficacité de la combinaison de cellules de levures de l'invention lorsqu'elles sont immobilisées sur un support en alginate.

De manière avantageuse, ce mode de réalisation préféré d'une composition selon l'invention permet de contrôler la répartition des levures inactives dans le contenant afin qu'elles soient situées le plus proche possible d'une zone d'oxydation. Il permet en outre d'éliminer facilement, par tout moyen mécanique approprié, les cellules de levures du liquide aqueux alimentaire contenant des substances sensibles à l'oxydation à un moment choisi par l'homme du métier comme étant le plus approprié, par exemple au moment où l'effet revendiqué a atteint son optimum d'efficacité à l'encontre de l'oxydation dudit liquide aqueux alimentaire..

Un vin blanc est considéré en cours de conservation à partir du moment où la fermentation n'a plus lieu et que l'on a éliminé tous les microorganismes présents dans le vin, par filtration par exemple. Le vin blanc se trouve alors stocké dans des contenants qui peuvent être, de façon non limitée :

- des outres à vins, ou BIB® de l'anglicisme bag-in-box, qui sont une poche à vin à l'intérieur d'une boîte en carton qui se rétracte au fur et à mesure qu'elle se vide sans que l'air y pénètre ;
- des bouteilles en verre obturées par un bouchon qui peuvent être 75cl, fiasque, dame-jeanne, magnum, jéroboam, réhoboam, mathusalem, salmanazar, balthazar, nabuchodonosor, salomon, souverain ou primat ;
- des cuves fermées (en inox, béton, plastique, céramique, etc...);
- des cubitainers ;
- des bouteilles en plastique ou des briques (ou Tetra-brik®));
- des contenants en bois de chêne qui peuvent être des foudres, feuillettes, fûts, barriques ou tonneaux.

De préférence, les contenants dans lesquels est conservé le vin blanc sont des BIB® ou des bouteilles en verre bouchées.

L'invention a aussi pour objet un procédé de stabilisation, au cours de sa conservation, d'un liquide, contenant des substances sensibles à l'oxydation, comprenant une étape de mise en contact du milieu constitué par ledit liquide à stabiliser avec une composition de stabilisation telle que définie dans la présente invention.

Ledit procédé de stabilisation a pour but de lutter contre l'oxydation progressive du liquide à stabiliser, avec la durée de conservation.

On peut distinguer deux types de mise en contact avec ladite composition de cellules de levures.

Le choix entre lesdits deux types de mise en contact s'effectue en fonction de la teneur en oxygène dissous dudit liquide contenant des substances sensibles à l'oxygène.

Si la teneur en oxygène dudit liquide est d'au moins 0,1 mg/L, par exemple dans un vin jeune avant conditionnement, il est important de détourner l'oxygène vers les cellules de levures non-viables capables de le consommer rapidement afin de préserver les substances sensibles à l'oxygène, par exemple les polyphénols. Il faut alors mettre en contact la totalité dudit liquide avec ladite composition de cellules de levures. Dans ce mode de réalisation, les deux types de cellules de levure, (i) les cellules capables de consommer rapidement de l'oxygène et (ii) les cellules riches en glutathion doivent être réparties de manière homogène dans ledit liquide, la surface de contact entre ledit liquide et lesdites levures étant alors maximales.

Si la teneur en oxygène dissous de la boisson est très faible, par exemple d'au plus 99 μg/L, par exemple le cas d'un vin en cours de conservation sur une longue période de temps, par exemple plusieurs mois ou même plusieurs années, en cuve ou bouteille ou autre contenant, il faut empêcher la dissolution de l'oxygène aux endroits où le liquide est en contact avec de l'oxygène qui a pu pénétrer dans le contenant après sa fermeture, et donc empêcher les phénomènes d'oxydation à l'interface entre le liquide et les lieux de pénétration de l'oxygène à l'intérieur du contenant. Pour cela le maximum de surface de contact entre l'oxygène et lesdites levures doit se trouver à ladite interface. Ainsi, la répartition desdites levures dans ledit liquide doit être ciblée sur lesdites interfaces, par exemple l'interface entre le liquide et l'air enfermé à sa surface dans une cuve, ou alors l'interface entre un vin et la surface interne d'une outre à vin. On peut alors envisager des formes de support d'immobilisation desdites levures adaptés aux différents types d'interface à occuper, par exemple une immobilisation desdites levures sur un film dans le cas des cuves ou des spaghettis d'alginate se répartissant de manière adéquate sur la surface interne dans le cas des outres à vin ou BIB®.

Lesdits deux modes de réalisation dudit procédé préférés sont illustrés par des exemples d'essais semi industriels sur le vin blanc qui sont décrits dans l'exemple 5.

De manière avantageuse, ledit procédé de stabilisation est une alternative à l'addition de sulfite (SO₂) dans les vins.

En effet, la mise en contact d'un vin avec une composition comprenant des cellules de levures selon le procédé de l'invention présente l'avantage, contrairement à l'addition de sulfite, d'éviter le risque d'allergie accru et n'entraîne pas de perte des qualités organoleptiques. De plus, on sait que la présence de lies de levures peut induire, par le biais de phénomènes de lyse cellulaire, l'introduction de colloïdes en mesure d'améliorer la structure aromatique du vin.

Par ailleurs, certaines substances provenant de la lyse des cellules de levures protègent le vin contre les précipitations d'hydrogéno-tartrate de potassium et de protéines. En outre, les parois cellulaires des levures peuvent absorber différentes substances indésirables, comme les produits de fermentation et les métaux lourds ou des toxines (ochratoxine A) ;

Il faut également souligner l'avantage technique que confère l'utilisation de cellules de levure inactivées ou non-viables au procédé selon l'invention. L'exemple 8 décrit que même dans le cas de leur inclusion dans un système d'immobilisation, les levures viables se multiplient et sont libérées dans le vin entraînant une augmentation notable de la turbidité du vin et en conséquence, une altération notable de sa qualité finale. A l'inverse, les cellules inactivées ne sont pas libérées dans le milieu et conservent leur capacité à consommer l'oxygène et à préserver les composés responsables des qualités organoleptiques du vin.

Les caractéristiques chromatiques et les propriétés organoleptiques dudit vin blanc fini sont illustrées dans des exemples ci-dessous.

Ledit vin blanc fini n'est pas oxydé au cours de sa conservation grâce à sa mise en contact avec les deux types de cellules de levure en combinaison de l'invention. En effet lesdites cellules de levure sont capables de consommer rapidement de l'oxygène dudit vin blanc empêchant dans un premier temps l'oxygène de réagir avec des composés sensibles à l'oxygène, dont certains sont garants des qualités organoleptiques du vin fini, puis dans un second temps par leur relarguage de glutathion -un antioxydant naturel- d'empêcher la formation de cascades de réactions d'oxydation à long terme, évitant ainsi la formation de composés nuisibles audites qualités organoleptiques que sont par exemple, la légèreté, le fruité, le goût, les arômes et l'aspect.

L'oxydation des vins blancs se traduit à terme par un brunissement visible à l'oeil nu mesurable dans l'espace CIE 1976.

L'espace CIE 1976 est bien connu de l'homme du métier. (Selon Wikipedia) CIE Lab est un modèle de représentation des couleurs développé par la commission Internationale de l'Éclairage (CIE), en 1976. La combinaison L est la luminance, qui va de 0 (noir) à 100% (blanc). La composante a représente la gamme de l'axe rouge (valeur positive) -> vert (négative) en passant par le blanc (0) si la luminance vaut 100%. La composante b représente la gamme de l'axe jaune (valeur positive) -> bleu (négative) en passant par le blanc (0) si la luminance vaut 100%. Le modèle de couleur Lab a été créé comme un modèle absolu, indépendant du matériel, utilisable comme référence théorique. Une chose importante à se rappeler dans ce modèle est le fait qu'il est par définition paramétré correctement. Il n'y a donc pas besoin d'espaces colorimétriques spécifiques basés sur modèle. En pratique toutefois, ce modèle est adapté en fonction des périphériques et des supports d'impression (Adobe 1998, sRGB, ColorMatch, Pantone, etc). CIE 1976 L*a*b* est directement basé sur le diagramme CIE XYZ et vise à uniformiser la perception des différences de couleurs. Les relations non-linéaires pour L*, a* et b* ont pour but d'imiter la réponse logarithmique de l'oeil (dans l'espace L*a*b l'oeil détecte 1 point de variation de a ou b pour 5 points de L). Les informations de couleurs se réfèrent à la chromaticité nécessaire comparée au point blanc du système.

On observe une augmentation du paramètre « a », qui fait passer la dominante verte vers la dominante rouge pour les vins blancs oxydés, voir l'exemple b sur les essais semi industriels. On n'observe pas cette augmentation du paramètre « a » pour le vin blanc fini selon l'invention.

Enfin l'invention est également relative à l'utilisation de la composition comprenant deux types de cellules de levure selon l'invention pour protéger un liquide aqueux alimentaire contenant des substances sensibles à l'oxygène contre les effets de l'oxydation desdites substances tout au long de sa conservation.

Dans le cas des vins finis conservés en outre à vin, ou BIB®, il est bien connu que même si le BIB® est pourvu d'un bouchon étanche, le conditionnement se fait en présence d'un espace de tête important rempli d'air et le film extérieur de l'enveloppe de vin est un film partiellement perméable à l'oxygène. Le BIB® présente ainsi de moindres propriétés d'étanchéité aux gaz en regard de la bouteille de verre, (voir rapport de l'ICV, Institut coopératif du vin et du Conseil interprofessionnel des vins du Languedoc, « Conditionnement en caisses-outres (BIB®) », ed 2006). En temps normal, le vin est additionné de sulfite ($SO_2$) composé chimique réducteur d'oxygène. Les sulfites présentent l'inconvénient d'être potentiellement allergéniques, d'utilisation limitée en quantité, et de communiquer à forte dose une odeur « négative » soufrée.

L'utilisation de la composition selon l'invention présente de nombreux avantages par rapport à l'utilisation de sulfite ($SO_2$) pour protéger un vin blanc contre les phénomènes d'oxydation. En effet les levures de ladite composition sont non viables ou inactivées, c'est à dire qu'elles sont incapables de se reproduire et de fermenter. Il n'y a aucun risque de contamination ou de trouble du vin au cours de sa conservation. Elles répondent aux normes alimentaires puisque issues de la fermentation dudit vin. L'efficacité de la combinaison de cellules de levures aptes à consommer de l'oxygène rapidement et de cellules levures enrichies en glutathion dans la conservation des qualités dudit vin blanc en BIB® est illustrée dans les exemples ci-dessous.

La composition, le procédé et l'utilisation selon l'invention sont illustrés par des exemples dans le domaine de la conservation des vins blancs. On peut cependant extrapoler ces exemples à d'autres types de liquides aqueux alimentaires contenant des substances sensibles à l'oxygène. Par exemple, des lies de levures issues des fermentations de vins rosés et de vins rouges particulièrement sensibles à l'oxydation peuvent aussi être utilisées pour protéger de l'oxydation lesdits vin rosés et rouges. Des levures de fermentation de la bière rendues non-viables et aptes à consommer de l'oxygène ou inactivées et enrichies en glutathion peuvent protéger la bière contre l'oxydation au cours de sa conservation.

Le fait que toute espèce de cellules de levures autorisées à la consommation humaine peut être rendue non viable et apte à consommer rapidement de l'oxygène ou peut être inactivée et enrichie en glutathion, rend la composition, le procédé et l'utilisation selon l'invention applicables à la stabilisation de tout type de liquide aqueux alimentaire, contenant des substances sensibles à l'oxydation, au cours de sa conservation.

Les exemples qui suivent décrivent en détail différents aspects de la présente invention.

**Exemple 1 : mesure de la consommation d'oxygène par les lies de levure:**

**A. Matériel et méthodes**

A.1. Matériel biologique

1. Levure *Saccharomyces cerevisiae* K1 marquée

La souche de levure *Saccharomyces cerevisiae* K1 marquée a été sélectionnée par l'ICV et l'INRA Montpellier et est produite, séchée et emballée par la société Lallemand. Cette souche a été utilisée pour l'ensemble des expériences.

Elle se présente sous forme de levures sèches actives (LSA). Ne nécessitant pas de pré-culture avant leur utilisation, ces LSA sont au préalables réhydratées : 1 g de ces levures sèches actives sont mises en suspension dans 10 mL d'eau glucosée à 50 g/L, tiédie à 37°C. Cette suspension est placée au bain-marie à 37°C pendant 30 minutes avec une homogénéisation toutes les 10 minutes. Le milieu de culture est ensuite inoculé avec la préparation de levures réhydratées. Le taux d'ensemencement est de 5 grammes par hectolitre, soit 500 μL de la suspension de levures réhydratées dans 1 L de milieu de culture.

2. Levure OptiWHITE®

OptiWHITE® est une levure oenologique inactivée, sélectionnée et préparée spécifiquement pour garantir une libération progressive des composés des parois de levures ainsi qu'un haut potentiel anti-oxydant (richesse en glutathion). Ces levures inactivées ont été utilisées de deux façons :

- en conditions oenologiques : soit 30 g/hL en début ou en fin de fermentation alcoolique
- en solution dans un milieu hydroalcoolique (tampon CMP décrit ci-dessous)

A.2. Milieu de culture

Le milieu de fermentation utilisé est un milieu synthétique dit MS300, qui simule la composition moyenne d'un moût de raisin. Il permet ainsi de travailler dans des conditions standards et de s'affranchir des variations de composition observées sur moûts naturels.

Le milieu MS 300 contient tous les acides aminés, vitamines et facteurs de croissance nécessaires au bon développement de la souche K1 en anaérobiose (Bely, 1990; Salmon et al., 2003). La quantité d'azote assimilable est d'environ 312 mg L$^{-1}$.

A.3. Milieux d'analyses

i. Tampon CMP

Ce milieu est un milieu hydroalcoolique dont le pH correspond à celui du vin. Il comprend :

- Acide Citrique : 31 mM
- Acide D,L-Malique : 45 mM
- $KH_2PO_4$: 10 mM
- Ethanol : 11,8 % (v/v)

Le pH est ajusté à 3,3 avec de la potasse KOH (10N)

ii. Tampon phtalate

Ce milieu avait été considéré par (Fornairon-Bonnefond, 2000) comme le milieu optimum pour l'analyse des vitesses de consommation d'oxygène. C'est une solution 0,1 M de phtalate ajusté à pH 4,5.

iii. Vin blanc Villaray

Ce vin est un vin blanc sec conditionné par Vinobag®. Son pH est de 3,3 et il contient 11 % d'éthanol (v/v). Il est issu de BIB® 3 litres ou 5 litres, re-conditionnés au laboratoire dans des bouteilles en verre mises sous atmosphère d'argon.

A.4. Mise en oeuvre technologigue des lies

Différentes solutions ont été proposées : les lies peuvent être enfermées (« piégées ») dans des capillaires membranaires et tubes ou des billes d'alginates.

1. Capillaires et tubes

Les membranes utilisées sont les suivantes :

- Membrane de microfiltration CAPFIL MF02 M2 (X-Flow, Enschede, Pays-Bas)
- Membrane de microfiltration MD200 CV2N (Microdyn-Nadir, Wiesbaden, Allemagne)

- Tube en silicone Tygon® R-3603 (Saint-Gobain, Akron, Etats-Unis)

Tableau 1 : caractéristiques des capillaires et des tubes

| | MF02 M2 | MD200 CV2N | R-3603 |
|---|---|---|---|
| **Composition** | Polyethersulfone & polyvinylpyrrolidone | Polypropylène | Silicone |
| **Caractère hydrophile** | Modérément hydrophile | Hydrophobe | Hydrophile |
| **Diamètre extérieur (m)** | $2,5.10^{-3}$ | $2,5.10^{-3}$ | $2,38.10^{-3}$ |
| **Diamètre intérieur (m)** | $1,5.10^{-3}$ | $1,6.10^{-3}$ | $3,97.10^{-3}$ |
| **Diamètre maximal des pores (m)** | $0,2.10^{-6}$ | | |
| **Diamètre moyen des pores (m)** | $0,09.10^{-6}$ | | |
| **Taille absolue des pores (m)** | | $0,2.10^{-6}$ | |
| **Rh0($10^{-11}m^{-1}$)** | $0,98 \pm 0,14$ | $1,16 \pm 0,21$ | |
| **Surface spécifique ($m^2$/g)** | 10,63 | 15,54 | |

*2. Billes d'alginates*

Un mélange de solution d'alginate de sodium à 3 % (p/v) et de la solution contenant les cellules à immobiliser est laissé tombé goutte à goutte à l'aide d'une pompe péristaltique dans une solution de chlorure de calcium (0,15 M). La quantité de cellules immobilisées sera précisée à chaque expérience.

Oxygénation des échantillons

Dans la plupart des cas, les échantillons ont été oxygénés à saturation avec l'oxygène de l'air. Les échantillons sont agités manuellement pendant une minute.

A.5. Méthodes analytiques

*1. Comptage cellulaire*

L'évaluation de la biomasse levurienne se fait par numération à l'aide d'un compteur électronique de particules Multisizer™ 3 Coulter Counter® (Beckman-Coulter, Roissy, France). Au préalable, l'échantillon à tester est dilué grâce à un diluteur automatique Microlab 500 (Hamilton, Bonaduz, Suisse) avec une solution isotonique de comptage Isoton (Beckman-Coulter, Roissy, France) afin d'avoir entre 4 000 et 80 000 cellules par mL dans l'échantillon dilué qui sera finalement compté. L'échantillon dilué est passé aux ultra-sons pendant 30 secondes sur le générateur Sonifier® S250A (Branson, Danbury, Etats-Unis) afin de séparer les agrégats éventuellement formés. Enfin la numération cellulaire est réalisée sur le compteur de particules.

*2. Masse sèche*

Trois fois 10 mL d'échantillon sont filtrés sous vide à travers un filtre de porosité 0,22 $\mu$m préalablement séché et taré. Le gâteau de cellules récupéré avec la membrane est séché au four à 108°C pendant 24 heures. Les échantillons sont ensuite pesés.

A.6. Vitesse de consommation de l'oxygène

*1. Oroboros® Oygraph-2k*

Pour mesurer les vitesses de consommation de l'oxygène de nos échantillons, l'Oxygraph-2k (Oroboros® Instruments, Innsbruck, Autriche) a été utilisé. C'est un appareil à haute résolution qui possède deux chambres en parallèle permettant une analyse de deux échantillons dans des conditions identiques.

Les caractéristiques du dispositif sont les suivantes :

➢Extérieur des chambres en acier inoxydable et régulation de température par effet Peltier → régulation très précise de la température.

➢Volume de réaction : 2 mL
➢Enregistrement des données toutes les 2 secondes
➢Chambres en verre, bouchons et canules en titane → minimisation des fuites et de la diffusion d'oxygène
➢Contrôle de l'agitation
➢Sondes à oxygène polarographiques : haute sensibilité de la sonde Orbisphère®

Les sondes à oxygène sont insérées latéralement, en biais par rapport à la cellule en verre. L'oxygène diffuse de l'échantillon vers la surface de la cathode à travers une couche non-agitée de l'échantillon situé au niveau extérieur de la membrane, puis à travers la membrane et enfin à travers la couche d'électrolyte. Pour minimiser cette couche d'échantillon non agité, une agitation constante et forte de l'échantillon est nécessaire : 750 rpm dans nos conditions.
Les caractéristiques de la sonde Orbisphère modèle 2120 sont :

➢Une cathode en or avec une surface relativement importante (diamètre de 2 mm) pour avoir une haute sensibilité et un zéro constant
➢Une anode en argent/chlorure d'argent dont la surface est plus large que celle de la cathode
➢Un électrolyte de chlorure de potassium (KCl à 1 M)
➢Une membrane FEP (fluorinated ethylene-propylene) de 0,25 $\mu$m d'épaisseur
➢Une tension de polarisation de 0,8 V

*2. Oxi 197S*

Afin de déterminer l'évolution de la concentration en oxygène au cours du temps et la quantité maximale totale de consommation d'oxygène, l'oxymètre OXI 197S (WTW, Weilheim, Allemagne) à électrode de Clark permet de mesurer la concentration en oxygène de nos échantillons.
La sonde utilisée est une CellOx 325 (WTW, Weilheim, Allemagne) dont les caractéristiques sont les suivantes :

➢Une électrode de travail en or
➢Une contre-électrode en plomb
➢Un électrolyte
➢Une membrane FEP (fluorinated ethylene-propylene) de 13 $\mu$m d'épaisseur

La mesure de la consommation d'oxygène par les lies de levure est réalisée dans une fiole régulée thermiquement par circulation d'eau dans sa double enveloppe. Un agitateur magnétique assure l'homogénéisation du milieu réactionnel au cours de la mesure. Les données sont enregistrées toutes les 3 secondes. Après saturation en oxygène de l'air par agitation manuelle (vigoureuse) de la solution à mesurer, la mesure de concentration en oxygène est lancée dans le flacon fermé hermétiquement jusqu'à ce que l'on atteigne un palier. Puis la solution est ré-oxygénée à l'air, le flacon est refermé puis la mesure est relancée. Et ainsi de suite. La quantité total d'oxygène consommé est déterminée à partir des données récupérées et analysées en cumul.

**A.7** Mesure de la concentration en oxygène au cours du temps

Chaque échantillon (vin seul et vin contenant des lies resuspendues) est porté à saturation en oxygène de l'air par agitation et réparti dans des flacons étanches de 70 mL. Les flacons sont tous maintenus à 30°C et les échantillons contenant des lies sont soit homogénéisés par agitation magnétique soit ne sont pas agités. Les courbes obtenues à partir des différentes mesures sont ensuite lissées par le logiciel Sigmaplot® (SPSS inc., Richmond, Etats-Unis). La vitesse de consommation d'oxygène est obtenue par calcul de la dérivée de la courbe lissée.

**B. Résultats**

Les résultats du Tableau 2 ci-dessous représentent le suivi de l'évolution de la vitesse de consommation d'oxygène mesurée à 30°C en fonction de la titration cellulaire des lies de levures resuspendues dans le tampon CMP (milieu hydroalcoolique de pH 3,3 à 11,8 % (v/v) éthanol). Les moyennes et écart-types de 4 mesures sont représentés sur le Tableau 2

Tableau 2

| Concentration cellulaire (10^6 cellules mL^-1) | Vitesse de consommation d'oxygène (ng O_2 s^-1 mL^-1) | Ecart-type (ng O_2 s^-1 mL^-1) |
|---|---|---|
| 0,0 | 0,15 | 0,015 |
| 33,6 | 0,08 | 0,010 |
| 115,2 | 0,18 | 0,026 |
| 374,0 | 0,37 | 0,005 |

Lorsque l'on mesure la consommation d'oxygène par les lies de levures, on s'aperçoit que dans un premier temps la vitesse de consommation pour une faible concentration cellulaire est moins importante que celle du tampon seul. Une hypothèse est que la mesure obtenue avec le milieu hydroalcoolique (CMP) sans levures correspond à la consommation de l'électrode elle-même et que lorsque l'on rajoute les lies, cette consommation devient négligeable du fait de l'affinité importante des lies pour l'oxygène.

**Exemple 2 : Comparaison de la consommation l'oxygène de différents types de levures**

**A. Matériel et méthodes :**

Le matériel et les méthodes sont les mêmes que pour l'exemple 1.

**B. Résultats**

Les vitesses de consommation d'oxygène par les lies (c'est-à-dire par les levures K1 cultivées dans le milieu de fermentation MS300 reproduisant les conditions du moût naturel) ont été mesurée à l'aide d'un oxymètre haute résolution Oxygraph-2k (Oroboros® Instruments, Innsbruck, Autriche) ont été comparées à celles de la levure sèche active K1 réhydratée suivant le protocole du fabriquant (Lallemand SAS, Blagnac, France) et à celle de la levure inactivée OptiWhite qui contient du glutathion (et/ou d'autres peptides cystéinylés). Les résultats obtenus sont montrés dans le tableau 3 et confirment l'intérêt des lies à consommer l'oxygène dissous dans le vin.
Les résultats du Tableau 3 montrent la consommation d'oxygène mesurée à 30°C en fonction de la masse sèche de lies, LSA et levures inactivées OptiWhite@ dans le tampon CMP (milieu hydroalcoolique de pH 3,3 à 11,8 % (v/v) éthanol).

Tableau 3

| Masse de lies (g) | Vitesse de consommation d'oxygène (ng O_2 s^-1 mL^-1) | Masse de LSA (g) | Vitesse de consommation d'oxygène (ng O_2 s^-1 mL^-1) | Masse d'Optiwhite (g) | Vitesse de consommation d'oxygène (ng O_2 s^-1 mL^-1) |
|---|---|---|---|---|---|
| 0,0000 | 0,2590 | 0,0000 | 0,2590 | 0,0000 | 0,2590 |
| 0,0045 | 0,7636 | 0,0050 | 0,3192 | 0,00018 | 0,3199 |
| 0,0089 | 0,8946 | 0,0100 | 0,5713 | 0,0016 | 0,2842 |
| | | | | 0,0083 | 0,2572 |
| | | | | 0,0142 | 0,3316 |

Les levures inactivées OptiWhite® ne semblent pas consommer d'oxygène. Ceci pourrait être dû au procédé utilisé pour leur inactivation qui affecterait la membrane (ou les stérols de la membrane) et donc les cellules ne pourraient plus consommer l'oxygène. Cependant ces levures contiennent effectivement du glutathion (3 à 4 fois plus que les lies) et donc restent intéressantes du point de vue de la protection des arômes (particulièrement les thiols volatiles). En effet, dans la littérature, l'effet protecteur des lies vis-à-vis de l'évolution des vins a été expliqué différemment (Dubourdieu et al., 2002; Lavigne-Cruége & Dubourdieu, 2004). Le glutathion (ou d'autres acides aminés ou peptides soufrés) pourrait protéger les arômes soufrés de leur détérioration en formant des ponts disulfure.

## Exemple 3 : Cinétique de libération de glutathion à partir de levures inactivées riches en glutathion.

A. Matériel et méthodes.

A.1. Produits étudiés.

Deux produits correspondant à des levures riches en glutathion ont été étudiés :

- Produit SI (produit Lesaffre)
- Produit OW (produit Lallemand)

A.2.Cinétique de relarguage.

0,5 g en poids sec de chacun des produits testés a été solubilisé dans 30 mL de milieu simulant un vin et contenant (par litre) : acide citrique : 6 g ; acide DL-malique : 6 g ; $KH_2PO_4$: 750 mg ; $K_2SO_4$: 500 mg ; $MgSO_4,7H_2O$ : 250 mg ; $CaCl_2,2H_2O$ 155 mg ; NaCl : 200 mg ; et éthanol, 120 mL. Le milieu est tamponné à pH 3,3 par ajout de KOH 10N.
La cinétique de relarguage a été mesurée pendant 10 heures à 28°C sous agitation. Les échantillons (1 mL) ont été prélevés, puis centrifugés à 14000xg pendant 5 minutes. Le surnageant a été déprotéinisé par traitement volume à volume avec de l'acide sulfosalycilique à 5% et centrifugation à 14000xg pendant 5 minutes. Ceci conduit à une dilution de l'échantillon par 2.

A.3 Analyse du glutathion libéré.

Le dosage de glutathion libéré a été effectué avec le kit de dosage du glutathion vendu par la firme Sigma (réf : CS0260-1KT). Ce kit dose l'ensemble des formes réduites et oxydées du glutathion. Une gamme étalon de glutathion réduit entre 0 et 25 $\mu$M est utilisée pour la calibration du kit.

## B. Résultats

Les résultats correspondant aux échantillons dosés sont les suivants :

Tableau 4 : cinétique de relargage du glutathion

| Echantillons | Temps de prélèvement (heures) | [GSH] dans 10 $\mu$l échantillon pur ($\mu$M) |
|---|---|---|
| SI | 0 | 2,0 |
| SI | 1 | 242,0 |
| SI | 3 | 228,0 |
| SI | 5 | 234,0 |
| SI | 5 | 216,0 |
| SI | 10 | 230,0 |
| OW | 0 | 2,0 |
| OW | 1 | 284,0 |
| OW | 3 | 298,0 |
| OW | 5 | 256,0 |
| OW | 5 | 240,0 |
| OW | 10 | 242,0 |

Les deux produits SI et OW libèrent du glutathion dans le milieu de façon rapide et quasi-identique pour atteindre une concentration d'environ 250 $\mu$M lorsqu'ils sont resuspendus à une concentration de 16,7 g (d.w.) $L^{-1}$.
En terme de teneur en glutathion des produits testés, on peut déduire les valeurs suivantes :

Tableau 5 : Teneur en glutathion

| Produit | Teneur en GSH (mg / g (d.w.)) |
|---|---|
| SI | 4,5 |

(suite)

| Produit | Teneur en GSH (mg / g (d.w.)) |
|---------|-------------------------------|
| OW | 5,5 |

**Exemple 4 : Mise en évidence des synergies d'action de la combinaison de deux types de cellules de levures, respectivement (i) des cellules de levure non viables et aptes à consommer rapidement de l'oxygène et (ii) des cellules de levure inactivées enrichies en glutathion, sur la conservation d'un liquide aqueux alimentaire sensible à l'oxydation, ici un vin blanc.**

**A. Matériel et méthodes**

Quatre modalités ont été définies (voir tableau 6 ci-dessous) avec 5 répétitions soit 5 flacons de 50 mL par modalité.

Tableau 6 : Modalités comparées

| Modalité | Code |
|----------|------|
| Témoin | T |
| Lies fraiches seules | L |
| Optiwhite® seul | OW |
| Lies fraiches + Optiwhite® | L+OW |
| A.1. Préparation : <br> * lies : total de cellules = $4,3.10^{11}$ divisées en 2 x 5 = 10 flacons soient $4,3.10^{10}$ cellules pour 50 mL ou $8,6.10^{11}$ cellules / litre. <br> * OW : 250 mg divisés par 5 flacons soient 50 mg/flacon ou 1 g/L. <br> * Alginate : 1500 mg divisés par 5 flacons soient 300 mg/flacon ou 6 g/L. <br> A part les flacons Témoin , tous les autres flacons contenaient 6g de billes d'alginates. | |

A.2. Vin utilisé

Nous avons utilisé un vin de Sauvignon blanc du Gers, vinifié par nos soins à la cave expérimentale de l'INRA-Pech Rouge. Ce vin très sensible à l'oxydation présente des notes aromatiques très fortes dues à une quantité importante en thiols soufrés variétaux. Ce vin comporte au démarrage de l'expérimentation une concentration en $SO_2$ libr de **15** mg/L

A.3. Mesures d'oxygène dissous

Nous avons utilisé le système PRESENS modèle Fibox3 Trace-V3 basé sur la fluorescence. Deux pastilles de référence SB3 de 5 mm de diamètre environ sont collées à l'intérieur de 2 flacons par modalité (soit un total de 8 flacons et 16 pastilles). Deux autres pastilles sont posées dans une bouteille remplie d'eau. La mesure d'oxygène se fait directement à l'aide d'une fibre optique à travers le verre. Nous n'avons pas étalonné l'appareil au préalable, par contre, nous avons quotidiennement enregistré la valeur d'oxygène dissous dans la bouteille d'eau à saturation et vérifié qu'elle correspondait aux valeurs théoriques données par les tables.

A.4. Mesures de luminosité et couleur

La couleur est mesurée avec un chromamètre MINOLTA équipé d'une sonde SPR200 pour objets solides, qui nous donne directement L, a et b (CIE 1976). La sonde est appliquée sur le flacon, une plaque blanche est disposée de l'autre coté au contact du verre et la mesure est réalisée. L'appareil n'est pas étalonné au préalable, mais une référence sur plaque blanche est prise avant et après chaque série de mesures et on vérifie qu'elle est stable au cours du temps.

A.5. Composés aromatiques

L'analyse a été réalisée par Laurent DAGAN (société NYSEOS SARL, Montpellier, France).

**B. Résultats**

B.1. Oxygène dissous

Les résultats des mesures de quantité d'oxygène dissous au cours du temps de conservation sont représentés sur la Figure 1.

Pendant les deux mois de stockage à température ambiante, le flacon Témoin (sans traitement) présente un niveau en oxygène dissous nettement plus élevé que les trois autres modalités. Une perturbation affectant tous les flacons traités apparaît entre 15 et 20 jours de traitement, mais à partir de ce temps et jusqu'à la fin de l'essai, les teneurs en oxygène des modalités Lies, OW et lies+OW décroissent lentement et de façon continue sans arrêt.

Concernant la perturbation observée sur les flacons avec traitement, on peut avancer l'explication suivante : pendant les 14 premiers jours, les lies et l'OW contenus dans les trois modalités Lies, OW et Lies+OW consomment rapidement l'oxygène présent du vin, d'où la baisse rapide observée de tension en oxygène. Cette capacité de consommation rapide de l'oxygène semble se ralentir au bout de 14 jours, et l'oxygène dissous remonte dans ces trois modalités. Il s'établit alors un nouvel équilibre entre l'oxygène consommé et l'oxygène pénétrant dans les flacons au niveau des bouchons à vis.

Avec plus de 4 mg/L, les niveaux d'oxygène dissous après 50 jours sont très élevés et attestent du maintien dans le vin d'une forte capacité d'oxydation pour toutes les modalités.

B.2. Luminosité et couleur.

Les résultats des mesures de chacun des paramètres « L », « a » et « b » sont représentés dans le Tableau 6 ci-dessous.

Tableau 7 : Mesure des paramètre L, a et b au cours du temps de conservation

| Temps (jours) | Témoin | | | Lies | | | OW | | | Lies + OW | | |
|---|---|---|---|---|---|---|---|---|---|---|---|---|
| | L | a | b | L | a | b | L | a | b | L | a | b |
| 0 | 35,40 | -0,37 | 5,10 | 35,39 | -0,39 | 5,07 | 35,45 | -0,44 | 5,11 | 34,80 | -0,31 | 5,01 |
| 5 | 35,47 | 0,26 | 5,46 | 33,60 | 0,23 | 4,02 | 36,45 | 0,18 | 5,27 | 35,55 | 0,23 | 4,93 |
| 8 | 35,94 | 0,50 | 5,30 | 36,31 | 0,24 | 4,65 | 36,55 | 0,21 | 4,90 | 35,25 | 0,33 | 4,60 |
| 12 | 35,51 | 0,67 | 5,03 | 37,10 | -0,23 | 4,41 | 35,67 | -0,05 | 4,43 | 36,26 | 0,15 | 4,65 |
| 15 | 35,67 | 0,75 | 5,19 | 36,64 | -0,51 | 4,16 | 36,20 | -0,18 | 4,61 | 36,84 | -0,30 | 4,73 |
| 19 | 35,41 | 0,79 | 5,27 | 36,85 | -0,70 | 4,03 | 36,27 | -0,20 | 4,65 | 37,02 | -0,70 | 4,22 |
| 22 | 35,46 | 0,93 | 5,21 | 37,59 | -0,75 | 4,06 | 36,51 | -0,19 | 4,61 | 37,41 | -0,78 | 4,21 |
| 26 | 34,77 | 0,91 | 4,97 | 37,57 | -0,82 | 3,94 | 36,46 | -0,22 | 4,56 | 37,55 | -0,83 | 4,21 |
| 29 | 35,07 | 1,03 | 5,32 | 37,36 | -0,62 | 4,16 | 35,67 | -0,01 | 4,42 | 36,46 | -0,60 | 4,01 |
| 33 | 35,25 | 1,12 | 5,22 | 37,07 | -0,59 | 3,92 | 36,10 | 0,02 | 4,57 | 37,60 | -0,70 | 4,20 |
| 37 | 35,05 | 1,18 | 5,19 | 37,55 | -0,57 | 4,29 | 36,23 | 0,01 | 4,88 | 36,70 | -0,52 | 4,13 |
| 41 | 35,42 | 1,19 | 5,65 | 37,03 | -0,49 | 4,19 | 35,61 | 0,10 | 4,64 | 37,20 | -0,53 | 4,32 |
| 44 | 34,96 | 1,16 | 5,45 | 36,73 | -0,49 | 4,46 | 35,66 | 0,12 | 4,82 | 36,55 | -0,49 | 4,27 |
| 47 | 35,43 | 1,15 | 5,89 | 37,17 | -0,50 | 4,40 | 36,05 | 0,11 | 5,02 | 36,72 | -0,48 | 4,28 |
| 50 | 34,92 | 1,19 | 5,69 | 37,38 | -0,42 | 4,57 | 35,37 | 0.25 | 4,84 | 37,20 | -0,41 | 4,56 |
| 54 | 34,64 | 1,17 | 5,84 | 36,49 | -0,40 | 4,36 | 36,07 | 0,12 | 5,34 | 36,23 | -0,36 | 4,39 |

• Evolution du paramètre chromatique «L ».

Les résultats sont également représentés sur la Figure 2a. La luminosité correspond au taux de lumière blanche dans la couleur du vin. Plus «L » augmente, moins l'échantillon est sombre. « L » varie entre 0 et 100.

L'évolution au cours de la conservation est d'abord chaotique, puis la luminosité des échantillons se stabilise au bout de 2 semaines et les modalités sont toujours classées dans le même ordre de luminosité croissante :

$$\text{Témoin} < \text{OW} < \text{Lies} = \text{Lies+OW}$$

• Evolution du paramètre chromatique « a ».. Les résultats sont également représentés sur la Figure 2b.

« a » évolue du vert au rouge. Dans les vins, l'augmentation de « a » traduit une évolution oxydative de la couleur. Le paramètre « a » augmente dés la première semaine de stockage. Ensuite il y a une séparation très nette entre les flacons « Témoin » pour lesquels le paramètre « a » continue d'augmenter, et les trois autres modalités pour lesquelles ce paramètre diminue nettement entre 7 et 20-25 jours avant de re-augmenter lentement, à la même vitesse que le Témoin.
A la fin de l'essai, les 4 modalités sont nettement différenciées.
Selon « a » croissant : Lies = Lies+OW < OW < Témoin

• Evolution du paramètre chromatique « b ». Les résultats sont également représentés sur la Figure 2c.

Le paramètre« b » mesure les proportions de bleu (valeurs négatives) ou de jaune (valeurs positives) de la couleur du vin.

Le paramètre chromatique « b » évolue peu au cours du temps, mais significativement. Dés 2 à 3 semaines, les 4 modalités sont ainsi discriminées, selon un paramètre « b » croissant :

$$\text{Lies} = \text{Lies+OW} < \text{OW} < \text{Témoin}$$

B.3. Composés aromatiques

Le 3-Mercapto-Hexanol (3MH) et son acétate (3MHA) sont deux molécules typiques des arômes spécifiques du cépage Sauvignon blanc. Ces deux molécules comportent une fonction thiol et sont donc particulièrement sensibles à l'oxydation. Les résultats des mesures de la teneur de ces deux composés après une durée de conservation de 60 jours sont représentés sur le Tableau 8 ci-dessous.

Tableau 8

|  | 3-Mercapto-Hexanol (ng/L) | Acétate de 3-Mercapto-Hexanol (ng /L) |
|---|---|---|
| Lies | 403 | 221 |
| OW | 892 | 256 |
| Lies+OW | 945 | 379 |
| Seuil de perception olfactive humaine | 60 | 8 |

La perte en thiols variétaux est plus importante pour la modalité Lies, et moins importante pour les modalités Lies+OW et OW.

L'évolution des concentrations est cohérente pour les trois modalités ayant contenu des billes d'alginate. L'OW serait plus efficace que les Lies seules, les effets de protection des thiols s'additionnant dans la modalité Lies+OW.

$$\text{Témoin} < \text{Lies} < \text{OW} < \text{Lies+OW}$$

B.4. Analyse sensorielle.

Les échantillons ont été dégustés à la fin de l'essai, le 24 Mai 2007, par deux oenologues : les oenologues O1 et O2.

• *Commentaires oenologue O1.*

Les vin les plus intenses en arôme sont les modalités Lies et Lies+OW de façon équivalente, OW est le moins intense.

• *Commentaires oenologue O2.*

Couleurs très différentes :

Témoin = jaune tirant sur le marron / rosé
Lies = jaune / très peu rosé
OW = jaune / un peu rosé
Lies+OW = jaune franc

Arômes :

Témoin = puissant, moitié composante « thiol » , moitié arômes d'oxydation
Lies+OW = le plus fin : arômes « thiols » discrets mais présents , absence d'arômes d'oxydation

Lies et OW : intermédiaires

Bouche :

Témoin = beaucoup plus lourd, oxydé
Lies+OW = le plus agréable et mieux équilibré en bouche
Lies et OW = intermédiaires

Bilan :

$$\text{Témoin} < \text{Lies} = \text{OW} < \text{Lies+OW}$$

Aucun goût de levure n'est perceptible.
Finalement, la modalité Lies+OW donne le vin le plus qualitatif sur les 3 descripteurs sensoriels: couleur, arôme au nez, perception en bouche. Le Témoin est indéniablement le plus mal jugé sur ses propriétés sensorielles.

*Conclusions*

Tous les flacons ont été conservés à plus de 20°C avec des teneurs en oxygène dissous supérieures à 4 mg/L. Ces conditions sont très favorables aux oxydations.

• J0 à J5.

Les 4 modalités ont le même comportement : baisse de l'oxygène dissous liée au vin ou à ses additifs ($SO_2$),

augmentation du paramètre chromatique « a » dans les mêmes proportions.

• J5àJ14.

Pour les 3 modalités Lies, OW et Lies+OW, il y a une baisse du paramètre chromatique « a ». Comme il y a encore beaucoup d'oxygène dissous dans tous les flacons, cette évolution différente montre qu'il y a bien une interaction issue des billes d'alginates, car l'oxydation des polyphénols reste limitée. Par contre les thiols ont été oxydés comme le montrent les analyses d'arômes.

Au contraire, dans le Témoin, le paramètre « a » augmente, donc l'oxydation des polyphénols continue. Cela entraîne un brunissement certain du vin.

Une baisse plus forte de l'oxygène dissous est bien observée dans les modalités Lies, OW et Lies+OW. L'alginate lui-même pourrait avoir piégé une partie de l'oxygène, mais alors ce serait cet oxygène qui serait consommé par les lies ou OW ; il ne serait pas rediffusé dans le vin par la suite. Il est plus probable que la capacité de consommation en 02 des lies et d'OW soit devenue nulle au bout de 14 jours par saturation des systèmes impliqués.

• J14 à J20.

L'oxygène dissous remonte dans les 3 modalités : Lies, OW, Lies+OW. Il est vraisemblable que cela traduit la différence entre la pénétration d'oxygène par le bouchon à vis, et sa consommation par le vin, les lies et/ou OW. Cette hypothèse est renforcée par les résultats de la modalité Témoin, qui atteint un niveau stable d'oxygène dissous bien supérieur à tous les autres flacons, faute d'un système consommateur d'oxygène.

• J20 à J25.

L'oxygène dissous se stabilise et recommence à décroître régulièrement et à même vitesse pour toutes les modalités. Depuis J5 jusqu'à J25, lez paramètre chromatique « a » continue à baisser et atteint sa valeur minimale pour les modalités Lies, OW et Lies+OW.

• J25 à J54.

Toutes les modalités suivent la même évolution : hausse modérée du paramètre chromatique « a » et baisse modérée de l'oxygène dissous.

En conclusion, même avec un effet négatif sur les concentrations en 3MH et son ester, les modalités avec lies, OW et surtout Lies+OW donnent un vin qualitativement meilleur que le Témoin. Cela montre tout l'intérêt de cette approche, les possibilités qu'elle offre pour protéger à la fois la couleur et les arômes de type thiols volatils.

Concernant les aspects synergiques ou antagonistes des deux systèmes antioxydatifs mis en présence, en utilisant une échelle de notation de 1 (moins efficace) à 3 (très efficace), le tableau 9 récapitulatif suivant peut être construit :

Tableau 9

| Caractères testés | Témoin | Lies | OW | Lies + OW |
|---|---|---|---|---|
| Consommation oxygène | 1 | 3 | 2 | 2 |
| Augmentation paramètre « L » | 1 | 3 | 2 | 3 |
| Diminution paramètre « a » | 1 | 3 | 2 | 3 |
| Diminution paramètre « b » | 1 | 3 | 2 | 3 |
| Maintien des thiols variétaux | 1 | 2 | 3 | 3 |
| Note organoleptique | 1 | 2 | 2 | 3 |
| Note totale = somme des notes | 6/18 | 6/18 | 13/18 | 17/18 |

L'effet antioxydant résultant des deux systèmes antioxydatifs mis en oeuvre n'est donc pas la simple juxtaposition des effets antioxydants des deux systèmes pris séparément. Ils se complémentent dans leurs actions respectives et conduisent à une protection efficace du vin en conservation contre les phénomènes d'oxydation, que ce soit au niveau de la couleur, de la préservation d'arômes variétaux sensibles à l'oxydation, et plus généralement au niveau de la qualité organoleptique.

**Exemple 5 : Essais semis industriels sur du vin blanc : Essais en bouteillons sur vin**

**A. Matériel et Méthodes**

Du vin blanc de Villaray, préalablement saturé en oxygène a été conditionné en bouteillon en verre fermé de façon étanche sous argon par bouchon Sovirel à joint Teflon.

Des billes d'alginate contenant à la fois des lies de levures K1 (levures présentant une consommation rapide d'oxygène) à une concentration finale équivalente de $2,3\ 10^6$ cellules/mL et des levures inactivées Optiwhite® (levures mortes relarguant du glutathion) à une concentration finale équivalente de 0,35 mg/ml ont été introduites dans des lots de bouteillons « essais », les autres bouteillons « témoins » étant conservés en absence de billes.

Les bouteillons ont été conservés 15 jours à température ambiante (simulation de conservation de vin), puis sacrifiés au cours du temps pour mesurer : 1) la teneur en oxygène dissous résiduel, 2) le potentiel d'oxydoréduction du vin, 3) la teneur en glutathion du vin, et 4) les caractéristiques chromatiques du vin.

**B. Résultats**

Les mesures (i) de la teneur en oxygène dissous, (ii) du potentiel d'oxydoréduction et (iii) de la teneur en glutathion du vin ont été réalisées. Les résultats sont reportés dans le Tableau 10 ci-dessous.

Tableau 10 : mesure de l'oxygène dissous

| Temps (Jours) | Témoin | | | Essai | | |
|---|---|---|---|---|---|---|
| | Oxygène dissous (mg/L) | Potentiel Redox (mV) | Glutathion (mg/L) | Oxygène dissous (mg/L) | Potentiel Redox (mV) | Glutathion mg/L |
| 0 | 7,1 | 191 | 0,39 | 7,1 | 191 | 0,39 |
| 1,8 | 3,7 | 185 | - | 2,4 | 155 | |
| 2,8 | 2,53 | 177 | 0,39 | 1,5 | 130 | 20,8 |
| 3,8 | 2,2 | 185 | 0,38 | 0,98 | 129 | 20,1 |
| 4,8 | 1,87 | 187 | 0,47 | 0,21 | 105 | 17,0 |
| 5,8 | 2 | 186 | 0,48 | 0,24 | 91 | 16,3 |
| 11,7 | 0 | 168 | 0,49 | 0 | 68 | 14,1 |

*5.1. Teneur en oxygène dissous résiduel*

Les résultats des mesures de l'oxygène dissous résiduel sont représentés sur le Tableau 10 ci-dessus ainsi que sur la Figure 3a.

5.2 Potentiel d'oxydoréduction

Les résultats des mesures du potentiel d'oxydo-réduction sont représentés sur le Tableau 10 ci-dessus ainsi que sur la Figure 3b

5.3 Teneur en glutathion du vin

Les résultats de la teneur en glutathion sont représentés sur le Tableau 10 ci-dessus ainsi que sur la figure 3c.

5.4. Caractéristiques chromatiques du vin

Les résultats des mesures des caractéristiques chromatiques du vin sont reportés dans le Tableau 11 ci-dessous ainsi que sur les figures 4a (paramètre « L »), 4b (paramètre « a ») et 4c (paramètre « b »).

Tableau 11

| Temps (Jours) | Témoin | | | Essai | | |
|---|---|---|---|---|---|---|
| | L | a | b | L | a | |
| 0 | 98,75 | -0,66 | 4,29 | 98,75 | -0,66 | 4,29 |
| 2,8 | 98,75 | -0,66 | 4,29 | 98,34 | -0,74 | 3,98 |
| 3,8 | 98,05 | -0,63 | 5,15 | 98,8 | -0,79 | 4,1 |
| 4,8 | 97,75 | -0,65 | 5,26 | 99,13 | -0,79 | 3,93 |
| 5,8 | 97,78 | -0,62 | 5,06 | 99,111 | -0,77 | 3,72 |
| 11,7 | 97,78 | -0,71 | 6,15 | 99,12 | -0,83 | 3,85 |

La présence de billes d'alginate contenant les lies et l'Optiwhite permet une chute beaucoup plus précoce et rapide de l'oxygène dissous dans le vin. Au vu des caractéristiques chromatiques des vins, cette consommation d'oxygène par les lies a permis de préserver les constituants polyphénoliques du vin d'une oxydation préjudiciable par l'oxygène (maintien des paramètres L et b*, correspondant respectivement à la clarté, et à la teinte jaune du vin). Le relarguage de glutathion par les billes a permis d'abaisser sensiblement le potentiel d'oxydoréduction du vin, gage d'un maintien potentiel de composés volatiles sensibles à l'oxydation (thiols variétaux par exemple).

### Exemple 6 : Essais semis industriels sur du vin blanc : Essais en BIB® sur vin

#### A. Matériel et Méthodes

Sur une chaîne d'embouteillage en BIB® de vin blanc de Sauvignon (société Skalli SARL Fortant de France, Sète), des spaghettis d'alginate contenant des lies de levures K1 ont été ajoutés avant remplissage sur la chaîne à une concentration équivalente de $2,3 \cdot 10^6$ cellules/mL. 30 BIB® de 3 litres ont été conditionnés, dont 15 «lots « témoins » et 15 lots « essais ». Les BIB® sont conservés depuis leur remplissage (5/10/2006) à 21 °C. Des prélèvements réguliers sur une période couvrant 6 mois à un an sont prévus.

#### B. Résultats

Les résultats présentés ne concernent que les premiers échantillons recueillis et analysés.
Malgré des teneurs initiales très différentes entre les lots témoins et essais (dues aux manipulation initiales des contenants : ouverture, introduction manuelle des spaghettis), on peut constater une chute très visible de la teneur en oxygène du vin an présence des lies.
Les résultats des mesures de la teneur en oxygène dissous sont présentés sur le Tableau 12 ci-dessous. Le Tableau 12 représente l'évolution de la teneur en oxygène dissous d'un vin conservé en BIB® témoin sans mise en contact avec la composition selon l'invention.

Tableau 12

| Temps (Jours) | Oxygène dissous (mg/L) | | | |
|---|---|---|---|---|
| | Témoin 1 | Témoin 2 | Essai 1 | Essai 2 |
| 0,00 | | | | |
| 19,00 | 0,66 | 0,89 | 2,78 | 3,44 |
| 36,00 | 0,70 | 1,28 | 2,19 | 2,80 |
| 54,00 | 0,86 | 1,12 | 1,58 | 1,67 |

Les résultats de mesure des caractéristiques chromatiques du vin sont représentés sur le Tableau 13 ci-dessous. Le Tableau 13 représente l'évolution des caractéristiques chromatographiques « L » et « b » de la CIE 1976 d'un vin conservé en BIB® témoin (« Témoin » et l'évolution des caractéristiques chromatographiques « L » et « b » de la CIE 1976 d'un vin conservé en BIB® mis en contact avec la composition selon l'invention (« Essai »). Les résultats sont représentés en fonction du nombre de jours de conservation à 30°C.

Tableau 13

| Temps | Témoin | | | | Essai | | | |
|---|---|---|---|---|---|---|---|---|
| (Jours) | L | b | L | b | L | b | L | b |
| 36,00 | 49,61 | 9,69 | 50,5 | 9,48 | 51,46 | 10,04 | 49,77 | 10,01 |
| 54,00 | 50,35 | 10,43 | 52,08 | 10,81 | 49,8 | 11,64 | 49,68 | 11,06 |

Les paramètres chromatiques du vin évoluent vers une diminution (ou maintien) du paramètre L en présence des lies immobilisées (alors qu'il présente une tendance à l'augmentation dans les lots témoins). On retrouve comme dans l'essai précédent, une augmentation plus forte du paramètre b* dans les lots essais, ce qui va vers une augmentation plus forte du caractère jaune des vins.

**Exemple 7 : Surfaces de contact entre les levures enrichies en glutathion et l'oxygène dissous**

Des exemples de surface de contact entre les cellules de levures et l'oxygène dissous sont données ci-dessous, à titre indicatif.:

Exemple : $2,3\ 10^9$ levures / L et 350 mg/L d'Opti-White ($1,17\ 10^{10}$ cellules /L)
Exemple : $8,6\ 10^{11}$ levures / L et 1 g/L d'Opti-White ($3.33\ 10^{10}$ cellules/L)

Une levure de vinification présente une surface équivalente moyenne autour de 80 $\mu m^2$ (SALMON,1997 - Enological fermentation kinetics of an isogenic ploidy series derived from an industrial Saccharomyces cerevisiae strain. Journal of Fermentation and Bioengineering, 83 (3), 253-260).
La surface de contact entre levures et vin a donc été comprise entre $1,4\ 10^{10}$ * 80 et $8.9\ 10^{11}$ * 80 soit entre $1\ 10^{12}$ et $7\ 10^{13}$ $\mu m^2$ /L, dans les présents essais illustratifs.

**Exemple 8 : Evaluation de levures non viables aptes à consommer rapidement l'oxygène autres que les lies et comparaison de la mise en oeuvre de levures non-viables (inactivées par traitement chimique) ou de levures viables**

**A. Matériel et méthodes**

**A.1. Préparation :**

Un même lot de levures sèches actives (souche EC1118, Lallemand, Blagnac) est incorporé dans de l'alginate sous forme viables ou non viables (inactivation thermique de 5 minutes à 74°C, soit un log UP de 2,48) et enrobé autour de billes de latex naturel. Ces billes de latex sont déposées dans des bouteilles blanches de 1 litre, remplie à moitié de vin. Le vin blanc utilisé est un vin de Sauvignon non sulfité.
La concentration en cellules de levure par bouteille est d'environ $2\times10^{10}$ cellules, réparties à la surface d'une vingtaine de billes de latex. Les bouteilles sont fermées par des bouchons étanches en polyéthylène et incubées à 20°C pendant 500 heures.

**A.2. Mesures d'oxygène dissous :**

Nous avons utilisé le système PRESENS modèle 5 Fibox3 Trace-V3 basé sur la fluorescence. Deux pastilles de référence SB3 de 5 mm de diamètre environ sont collées à l'intérieur de chaque bouteille utilisée (une dans la phase gaz, l'autre dans la phase liquide). La mesure d'oxygène se fait directement à l'aide d'une fibre optique à travers le verre. La valeur d'oxygène dissous dans une bouteille d'eau à saturation est utilisée pour la calibration quotidienne.

**A.3. Mesures de turbidité :**

La turbidité finale des vins est mesurée grâce à un turbidimètre HACH (modèle 58357-00).

**B. Résultats**

**B.1. Consommation d'oxygène et turbidité:**

Bien que les levures viables présentent des activités de consommation d'oxygène sensiblement égales à celles observées avec les cellules inactivées thermiquement, il apparaît nettement (Tableau 1) que l'encapsulation dans l'alginate de levures viables conduit à un relarguage non négligeable de levures dans le milieu (augmentation notable de la turbidité du vin), ce qui ne se produit pas avec des levures inactivées. Ce relarguage dans le milieu corresponds à une faible croissance des levures viables au sein des couches d'alginate et à une dissémination de ces souches dans le vin. Ce phénomène est préjudiciable à la qualité finale du produit fini.

**Tableau 14 : Valeurs des populations initiales ensemencées par bouteille et finales, de la turbidité du milieu et de l'oxygène dissous consommé après 500 heures d'incubation à 20°C.**

| | Population initiale (cellules/ml) | Population finale (cellules/ml) | Turbidité (NTU) | Oxygène dissous total consommé (mg/L) |
|---|---|---|---|---|
| **Levures viables** | $3,4 \times 10^7$ | $10,54 \times 10^7$ | 18 | 1,24 |
| **Levures inactivées thermiquement** | $5,8 \times 10^7$ | $5,0 \times 10^7$ | 7 | 1,61 |
| **Vin seul** | 0 | 0 | 5 | 0,86 |

**Revendications**

1. Composition pour protéger de l'oxydation un liquide alimentaire contenant des substances sensibles à l'oxydation au cours de sa conservation comprenant une combinaison de deux types de cellules de levures :

   (i) des cellules de levure non viables et aptes à consommer rapidement l'oxygène, lesdites cellules de levure présentant une vitesse de consommation en oxygène d'au moins 5 ng $O_2 . s^{-1}$ pour $10^{10}$ cellules de levures lorsqu'elles sont présentes à une concentration de l'ordre de $10^8$ cellules/ml dans un tampon hydroalcoolique, et (ii) des cellules de levure inactivées enrichies en glutathion.

2. Composition selon la revendication 1 **caractérisée en ce que** ledit liquide aqueux alimentaire est une boisson fermentée.

3. Composition selon les revendications 1 et 2 **caractérisée en ce que** ledit liquide aqueux alimentaire est un vin.

4. Composition selon les revendications 1 à 3 **caractérisée en ce que** ledit liquide est un vin blanc.

5. Composition selon la revendication 1 **caractérisée en ce que** lesdites cellules de levure non viables et aptes à consommer rapidement de l'oxygène consistent en des lies de levures issues de la fermentation..

6. Composition selon les revendications 1 et 5 **caractérisée en ce que** les dites cellules de levure non viables et aptes à consommer rapidement de l'oxygène sont de l'espèce *Saccharomyces cerevisiae.*

7. Composition selon la revendication 1 **caractérisée en ce que** les cellules de levures inactivées riches en glutathion sont des levures de type oenologique.

8. Composition selon les revendications 1 et 7 **caractérisée en ce que** les cellules de levure inactivées enrichies en glutathion sont des levures de la famille des Saccharomyces.

9. Composition selon les revendications 1, 7 ou 8 **caractérisées en ce que** les cellules de levure inactivées riches en glutathion sont capables de libérer dans le milieu où elles se trouvent une quantité de glutathion d'au moins 1% de glutathion en poids rapporté au poids total de matière sèche de la levure.

10. Composition selon l'une quelconque des revendications 1 à 9 **caractérisée en ce que** lesdites cellules de levure sont incluses dans un système d'immobilisation perméable audit liquide réalisé dans un matériau compatible avec les normes alimentaires.

11. Composition selon la revendication 10 **caractérisée en ce que** ledit conteneur est choisi parmi le groupe des capillaires membranaires, des tubes en silicones ou de l'alginate sous forme de billes ou de spaghettis.

12. Composition selon les revendications 10 et 11 **caractérisée en ce que** ledit système d'immobilisation est de l'alginate sous forme de billes ou de spaghettis.

13. Procédé de stabilisation, au cours de sa conservation, d'un liquide aqueux alimentaire, contenant des substances sensibles à l'oxydation, en cours de conservation comprenant la mise en contact du milieu constitué par ledit liquide avec une composition selon l'une quelconque des revendications 1 à 12.

14. Procédé selon la revendication 13 **caractérisé en ce que** la surface de contact entre les levures mises en jeu dans le système d'immobilisation et ledit liquide aqueux alimentaire soit d'au moins $10^{12}$ $\mu$m$^2$/L et soit répartie de manière homogène dans tout ledit liquide, lorsque le taux d'oxygène dissous dans ledit liquide aqueux alimentaire est d'au moins 0,1 mg/L dudit liquide.

15. Procédé selon la revendication 13 **caractérisé en ce que** la surface de contact entre les levures mises en jeu dans le système d'immobilisation et ledit liquide aqueux alimentaire soit d'au moins $10^{12}$ $\mu$m$^2$/L et soit plus importante aux points de contact entre ledit liquide et les points de pénétration de l'oxygène dans le conteneur, lorsque le taux d'oxygène dissous dans ledit liquide aqueux alimentaire est d'au plus 99 $\mu$g/L dudit liquide.

16. Utilisation de la composition selon la revendication 1 pour la préservation contre les effets de l'oxydation de liquides contenant des substances sensibles à l'oxygène au cours de leur conservation.

**Claims**

1. A composition for protecting from oxidation a dietary liquid, which contains substances sensitive to oxidation during the shelf-life thereof comprising a combination of two types of yeast cells:

    (i) non-viable yeast cells capable of rapidly consuming oxygen, said yeast cells having an oxygen consumption rate of at least 5 ng $O_2$. s$^{-1}$ for $10^{10}$ yeast cells when present at a concentration of about $10^8$ cells/ml in a hydroalcoholic buffer, and
    (ii) inactivated yeast cells enriched with glutathione.

2. A composition according to claim 1, wherein said dietary aqueous liquid is a fermented drink.

3. A composition according to claims 1 and 2, wherein said dietary aqueous liquid is a wine.

4. A composition according to claims 1 to 3, wherein said liquid is a white wine.

5. A composition according to claim 1, wherein said non-viable yeast cells capable of rapidly consuming oxygen consist in yeast dregs obtained from fermentation.

6. A composition according to claims 1 and 5, wherein said non-viable yeast cells capable of rapidly consuming oxygen are of the *Saccharomyces cerevisiae* species.

7. A composition according to claim 1, wherein inactivated yeast cells enriched with glutathione are yeasts of the enological type.

8. A composition according to claims 1 and 7, wherein inactivated yeast cells enriched with glutathione are yeasts of the *Saccharomyces* family.

9. A composition according to claims 1, 7 or 8, wherein inactivated yeast cells enriched with glutathione are capable of releasing in the medium where they are incorporated a glutathione amount of at least 1% of glutathione by weight relative to the yeast dry matter total weight.

10. A composition according to any of claims 1 to 9, wherein said yeast cells are included in an immobilization system pervious to said liquid made in a material compatible with food standards.

11. A composition according to claim 10, wherein said container is selected in the group consisting of membrane capillaries, silicone tubes or alginate in the form of beads or spaghettis.

12. A composition according to claims 10 and 11, wherein said immobilization system is alginate in the form of beads or spaghettis.

13. A method for stabilizing, during the shelf-life thereof, a dietary aqueous liquid, containing substances sensitive to oxidation, comprising contacting the medium composed of said liquid with a composition according to any of claims 1 to 12.

14. A method according to claim 13, wherein the contact surface between yeasts implemented in the immobilization system and said dietary aqueous liquid is of at least $10^{12}$ $\mu m^2/L$ and is homogeneously distributed within the whole said liquid, when the dissolved oxygen amount in said dietary aqueous liquid is of at least 0.1 mg/L of said liquid.

15. A method according to claim 13, wherein the contact surface between the yeasts implemented in the immobilization system and said dietary aqueous liquid is of at least $10^{12}$ $\mu m^2/L$ and is higher at the contact points between said liquid and the oxygen penetration points in the container, when the dissolved oxygen amount in said dietary aqueous liquid is of at most 99 $\mu g/L$ of said liquid.

16. Use of the composition according to claim 1 for preserving from oxidation effects liquids containing substances sensitive to oxygen during the shelf-life thereof.

**Patentansprüche**

1. Zusammensetzung zum Schützen eines flüssigen Lebensmittels, das oxidationsempfindliche Substanzen enthält, vor Oxidation im Verlaufe seiner Konservierung, umfassend eine Kombination von zwei Arten von Hefezellen :

    (i) nicht lebensfähige Hefezellen, die schnell Sauerstoff verbrauchen können, wobei die Hefezellen eine Sauerstoffverbrauchsgeschwindigkeit von wenigstens 5 ng $O_2 \cdot s^{-1}$ für $10^{10}$ Hefezellen aufweisen, wenn sie in einer Konzentration in der Größenordnung von $10^8$ Zellen/ml in einem wässrig-alkoholischen Puffer vorhanden sind; und
    (ii) inaktivierte Hefezellen, die mit Glutathion angereichert sind.

2. Zusammensetzung gemäß Anspruch 1, **dadurch gekennzeichnet, dass** das wässrige flüssige Lebensmittel ein fermentiertes Getränk ist.

3. Zusammensetzung gemäß den Ansprüchen 1 und 2, **dadurch gekennzeichnet, dass** das wässrige flüssige Lebensmittel ein Wein ist.

4. Zusammensetzung gemäß den Ansprüchen 1 bis 3, **dadurch gekennzeichnet, dass** die Flüssigkeit ein Weißwein ist.

5. Zusammensetzung gemäß Anspruch 1, **dadurch gekennzeichnet, dass** die nicht lebensfähigen Hefezellen, die schnell Sauerstoff verbrauchen können, aus Bodenhefen bestehen, die aus der Fermentation hervorgegangen sind.

6. Zusammensetzung gemäß Anspruch 1 und 5, **dadurch gekennzeichnet, dass** die nicht lebensfähigen Hefezellen, die schnell Sauerstoff verbrauchen können, zur Spezies *Saccharomyces cerevisiae* gehören.

7. Zusammensetzung gemäß Anspruch 1, **dadurch gekennzeichnet, dass** es sich bei den inaktivierten Hefezellen, die reich an Glutathion sind, um Hefen des Weinhefetyps handelt.

8. Zusammensetzung gemäß den Ansprüchen 1 und 7, **dadurch gekennzeichnet, dass** es sich bei den inaktivierten Hefezellen, die mit Glutathion angereichert sind, um Hefen aus der Familie der *Saccharomyces* handelt.

9. Zusammensetzung gemäß den Ansprüchen 1, 7 oder 8, **dadurch gekennzeichnet, dass** die inaktivierten Hefezellen, die reich an Glutathion sind, in dem Medium, in dem sie sich befinden, eine Menge an Glutathion von wenigstens 1 Gew.-% Glutathion freisetzen können, bezogen auf das Gesamtgewicht der Trockensubstanz der Hefe.

10. Zusammensetzung gemäß einem der Ansprüche 1 bis 9, **dadurch gekennzeichnet, dass** die Hefezellen in einem für die Flüssigkeit durchlässigen Immobilisierungssystem eingeschlossen sind, das in einem Material realisiert ist, welches mit den Lebensmittelstandards im Einklang steht.

11. Zusammensetzung gemäß Anspruch 10, **dadurch gekennzeichnet, dass** der Behälter aus der Gruppe der Kapillarmembranen, der Röhren aus Silikon oder aus Alginat in Form von Kügelchen oder Spaghetti ausgewählt ist.

12. Zusammensetzung gemäß den Ansprüchen 10 und 11, **dadurch gekennzeichnet, dass** es sich bei dem Immobilisierungssystem um Alginat in Form von Kügelchen oder Spaghetti handelt.

13. Verfahren zur Stabilisierung eines wässrigen flüssigen Lebensmittels, das oxidationsempfindliche Substanzen enthält, im Verlaufe seiner Konservierung, umfassend das In-Kontakt-Bringen des Mediums, das aus der Flüssigkeit besteht, mit einer Zusammensetzung gemäß einem der Ansprüche 1 bis 12.

14. Verfahren gemäß Anspruch 13, **dadurch gekennzeichnet, dass** die Kontaktfläche zwischen den Hefen, die in dem Immobilisierungssystem eingesetzt werden, und dem wässrigen flüssigen Lebensmittel wenigstens $10^{12}$ $\mu m^2/l$ beträgt und in der gesamten Flüssigkeit homogen verteilt ist, wenn der Gehalt an in dem wässrigen flüssigen Lebensmittel gelöstern Sauerstoff wenigstens 0,1 mg/l der Flüssigkeit beträgt.

15. Verfahren gemäß Anspruch 13, **dadurch gekennzeichnet, dass** die Kontaktfläche zwischen den Hefen, die in dem Immobilisierungssystem eingesetzt werden, und dem wässrigen flüssigen Lebensmittel wenigstens $10^{12}$ $\mu m^2/l$ beträgt und an den Kontaktpunkten zwischen der Flüssigkeit und den Punkten des Sauerstoffeintritts in den Behälter noch höher ist, wenn der Gehalt an in dem wässrigen flüssigen Lebensmittel gelöstem Sauerstoff höchstens 99 $\mu g/l$ der Flüssigkeit beträgt.

16. Verwendung der Zusammensetzung gemäß Anspruch 1 zum Schutz von Flüssigkeiten, die sauerstoffempfindliche Substanzen enthalten, vor den Wirkungen der Oxidation im Verlaufe ihrer Konservierung.

Figure 1

# Figure 2a

EP 2 247 205 B1

Figure 2b

**Figure 2c**

EP 2 247 205 B1

**Figure 3a**

**Figure 3b**

EP 2 247 205 B1

**Figure 3c**

Fig. 4a

Fig. 4b

Fig. 4c

Figure 4a, 4b et 4c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2006141319 B
- JP 6100044 B
- JP 5319459 B
- EP 0134687 A
- EP 1607476 A
- EP 0305005 B1
- EP 1236795 A
- WO 2005080543 A

**Littérature non-brevet citée dans la description**

- **Fialdes, E.** *Rev. des oenologues,* 1989, vol. 54, 19-22
- **Baron, R. et al.** *Z. Lebensm. Unters Forsch,* 1997, vol. 205, 474-78
- **Sims, C. A. et al.** *Am. J. Enol. Vitic,* 1995, vol. 46 (2), 155-158
- **Bonilla et al.** *J. Agric. Food Chem.,* 2001, vol. 49, 1928-1933
- **Fornairon et al.** Food Chemistry. 2000, 519-528
- **Salmon et al.** *Journal of Bioscience and Bioengineering,* 2003, 496-503
- **Catalino et al.** Applied Microbiology and Biotechnology. 1992, 141-146
- **Santos et al.** Applied Microbiology and Biotechnology. 2007, 1211-1216
- **Kawaguti et al.** *Biochemical Engineering Journal,* 2006, vol. 29, 270-277
- **Lu ; Wilkins.** *Journal of Hazardous Materials,* 2006, vol. 49, 165-179
- **Podrazky ; Kuncova.** *Sensors and Actuators B: Chemical,* 2005, vol. 107, 126-134
- **Riordan et al.** *Bioresource Technology,* 1996, vol. 55, 171-173
- **SALMON.** Enological fermentation kinetics of an isogenic ploidy series derived from an industrial Saccharomyces cerevisiae strain. *Journal of Fermentation and Bioengineering,* 1997, vol. 83 (3), 253-260